(19) Europäisches Patentamt
European Patent Office
Office européen des brevets

(11) **EP 4 429 373 A1**

(12) **EUROPEAN PATENT APPLICATION**
published in accordance with Art. 153(4) EPC

(43) Date of publication:
**11.09.2024 Bulletin 2024/37**

(21) Application number: **22904587.7**

(22) Date of filing: **05.12.2022**

(51) International Patent Classification (IPC):
**H04W 72/04** (2023.01)   **H04W 64/00** (2009.01)

(52) Cooperative Patent Classification (CPC):
**H04W 64/00; H04W 72/04**

(86) International application number:
**PCT/KR2022/019593**

(87) International publication number:
**WO 2023/106757 (15.06.2023 Gazette 2023/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.12.2021 KR 20210173906**

(71) Applicant: Samsung Electronics Co., Ltd.
**Suwon-si, Gyeonggi-do 16677 (KR)**

(72) Inventors:
• **SHIN, Cheolkyu**
**Suwon-si, Gyeonggi-do 16677 (KR)**
• **RYU, Hyunseok**
**Suwon-si, Gyeonggi-do 16677 (KR)**
• **PARK, Kyoungmin**
**Suwon-si, Gyeonggi-do 16677 (KR)**
• **YEO, Jeongho**
**Suwon-si, Gyeonggi-do 16677 (KR)**

(74) Representative: **Gulde & Partner
Patent- und Rechtsanwaltskanzlei mbB
Wallstraße 58/59
10179 Berlin (DE)**

(54) **SIDELINK POSITIONING METHOD AND DEVICE IN WIRELESS COMMUNICATION SYSTEM**

(57)     The present disclosure relates to a 5G or 6G communication system for supporting a higher data transmission rate. The disclosure relates to a method by which a first terminal performs positioning through a sidelink in a wireless communication system, comprising the steps of: allocating a resource for transmitting a first sidelink positioning signal; transmitting the first sidelink positioning signal on the basis of the allocated resource; receiving, from at least one second terminal, a second sidelink positioning signal including a transmission/reception signal time difference of the at least one second terminal; measuring a transmission/reception signal time difference of the first terminal on the basis of the second sidelink positioning signal; and measuring terminal positioning on the basis of the transmission/reception signal time difference of the first terminal and the transmission/reception signal time difference of the second terminal, wherein the first sidelink positioning signal can include a first sidelink positioning reference signal (S-PRS), and the second sidelink positioning signal can include a second S-PRS.

FIG. 7

EP 4 429 373 A1

**Description**

**[Technical Field]**

The disclosure relates to a wireless mobile communication system, and particularly to a method and apparatus for performing positioning (location measurement) through a sidelink.

**[Background Art]**

Fifth generation (5G) mobile communication technologies define broad frequency bands such that high transmission rates and new services are possible, and can be implemented not only in "Sub 6 gigahertz (GHz)" bands such as 3.5 GHz, but also in "Above 6 GHz" bands referred to as millimeter wave (mmWave) such as 28 GHz and 39 GHz. In addition, it has been considered to implement sixth generation (6G) mobile communication technologies, which is referred to as Beyond 5G systems, in terahertz (THz) bands (for example, 95 GHz to 3 THz bands) in order to accomplish transmission rates fifty times faster than 5G mobile communication technologies and ultra-low latencies one-tenth of 5G mobile communication technologies.

At the beginning of development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive multi input multi output (MIMO) for mitigating radio-wave path loss and increasing radio-wave transmission distances in mmWave, supporting numerologies (operating multiple subcarrier spacings) for efficiently utilizing mmWave resources and dynamic operation of slot formats, initial access technologies for supporting multi-beam transmission and broadbands, definition and operation of Band-Width Part (BWP), new channel coding methods such as a Low Density Parity Check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, new radio (NR) user equipment (UE) Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, Integrated Access and Backhaul (IAB) for providing a node for network service area expansion by supporting a wireless backhaul link and an access link in an integrated manner, mobility enhancement including conditional handover and Dual Active Protocol Stack (DAPS) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, Mobile Edge Computing (MEC) for receiving services based on UE positions, and the like.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, drone communication, and the like.

Furthermore, such development of 5G mobile communication systems will serve as a basis for developing not only new waveforms for ensuring coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS) technology, but also full-duplex technology for increasing frequency efficiency of 6G mobile communication technologies and improving system networks, AI-based communication technology for implementing system optimization by utilizing satellites and Artificial Intelligence (AI) from the design stage and internalizing end-to-end AI support functions, and next-generation distributed computing technology for implementing services at levels of complexity exceeding the limit of UE operation capability by utilizing ultra-high-performance communication and computing resources.

**[Disclosure of Invention]**

**[Technical Problem]**

The disclosure relates to a wireless mobile communication system, and particularly to a method and apparatus for performing positioning (location measurement) through a sidelink. Specifically, the disclosure proposes methods that use round trip time (RTT) when performing positioning through a sidelink.

**[Solution to Problem]**

According to an embodiment of the disclosure, a method by which a first terminal performs positioning through a sidelink in a wireless communication system, comprises allocating a resource for transmitting a first sidelink positioning signal; transmitting the first sidelink positioning signal based on the allocated resource; receiving, from at least one second terminal, a second sidelink positioning signal including a transmission/reception signal time difference of the at least one second terminal; measuring a transmission/reception signal time difference of the first terminal based on the second sidelink positioning signal; and measuring terminal positioning based on the transmission/reception signal time difference of the first terminal and the transmission/reception signal time difference of the second terminal, wherein the first sidelink positioning signal includes a first sidelink positioning reference signal (S-PRS), and the second sidelink positioning signal includes a second S-PRS.

According to an embodiment of the disclosure, a method by which a second terminal performs positioning through a sidelink in a wireless communication system, comprises receiving a first sidelink positioning signal; measuring a transmission/reception signal time difference of a second terminal based on the first sidelink positioning signal; allocating a resource for transmitting a second sidelink positioning signal; and transmitting the second sidelink positioning signal including the transmission/reception signal time difference of the second terminal based on the allocated resource, wherein the first sidelink positioning signal includes a first sidelink positioning reference signal (S-PRS), and the second sidelink positioning signal includes a second S-PRS.

According to an embodiment of the disclosure, a first terminal that performs positioning through a sidelink in a wireless communication system, comprises a transceiver that transmit and receive at least one signal; and a controller, wherein the controller controls to allocate a resource for transmitting a first sidelink positioning signal, transmit the first sidelink positioning signal based on the allocated resource, receive, from at least one second terminal, a second sidelink positioning signal including a transmission/reception signal time difference of the at least one second terminal, measure a transmission/reception signal time difference of the first terminal based on the second sidelink positioning signal, and measure terminal positioning based on the transmission/reception signal time difference of the first terminal and the transmission/reception signal time difference of the second terminal, wherein the first sidelink positioning signal includes a first sidelink positioning reference signal (S-PRS), and the second sidelink positioning signal includes a second S-PRS.

According to an embodiment, a second terminal that performs positioning through a sidelink in a wireless communication system, comprises a transceiver that transmit and receive at least one signal; and a controller, wherein the controller controls to receive a first sidelink positioning signal, measure a transmission/reception signal time difference of a second terminal based on the first sidelink positioning signal, allocate a resource for transmitting a second sidelink positioning signal, and transmit the second sidelink positioning signal including the transmission/reception signal time difference of the second terminal based on the allocated resource, wherein the first sidelink positioning signal includes a first sidelink positioning reference signal (S-PRS), and the second sidelink positioning signal includes a second S-PRS.

**[Advantageous Effects of Invention]**

The disclosure is to propose a method and procedure for a terminal to perform positioning (location measurement) through a sidelink. The proposed method may enable positioning in a sidelink.

**[Brief Description of Drawings]**

FIG. 1 is a diagram illustrating a system according to an embodiment of the disclosure.
FIG. 2 is a diagram illustrating a communication method performed through a sidelink according to an embodiment of the disclosure.

FIG. 3 is a diagram for explaining a resource pool defined by a set (group) of resources on time and frequency used for transmission and reception of a sidelink according to an embodiment of the disclosure.

FIG. 4 is a diagram for explaining a case of calculating the location of a terminal through a sidelink according to an embodiment of the disclosure.

FIG. 5 is a diagram for explaining a case of calculating the location of a terminal through a sidelink according to an embodiment of the disclosure.

FIG. 6 is a diagram for explaining a case of calculating the location of a terminal through a sidelink according to an embodiment of the disclosure.

FIG. 7 is a diagram for explaining a case where positioning is performed using a round trip time (RTT) scheme according to an embodiment of the disclosure.

FIG. 8 is a diagram for explaining the pattern of sideline positioning reference signal (S-PRS), which is a sidelink positioning signal, according to an embodiment of the disclosure.

FIG. 9 is diagrams for explaining the pattern of S-PRS, which is a sidelink positioning signal, according to an embodiment of the disclosure.

FIG. 10 is a diagram for explaining a method for transmitting S-PRS, which is a sidelink positioning signal, in a dedicated resource area that is separate from a resource area in which physical sidelink shared channel (PSSCH) is transmitted when transmitting the S-PRS, according to an embodiment of the disclosure.

FIG. 11 is a diagram for explaining the above-mentioned parameters when selecting and allocating a transmission resource for S-PRS, which is a sidelink positioning signal, according to an embodiment of the disclosure.

FIG. 12 is a diagram for explaining a structure of a physical layer for transmitting a sidelink positioning signal when transmitting a corresponding signal according to an embodiment of the disclosure.

FIG. 13 is a diagram for explaining a positioning procedure between terminals in case where a single sided RTT method is considered in a sidelink according to an embodiment of the disclosure.

FIG. 14 is a diagram for explaining a positioning procedure between terminals in case where a double sided RTT method is considered in a sidelink according to an embodiment of the disclosure.

FIG. 15 is a block diagram illustrating an internal structure of a terminal according to an embodiment of the disclosure.

FIG. 16 is a block diagram illustrating an internal structure of a base station according to an embodiment of the disclosure.

[Mode for Disclosure]

Hereinafter, embodiments of the disclosure will be described with reference to accompanying drawings.

In describing the embodiments, descriptions of technical contents that are well known in the technical field to which the disclosure belongs and are not directly related to the disclosure will be omitted. By omitting the unnecessary description, the gist of the disclosure may be more clearly conveyed without obscuring the subject matter.

For the same reason, in the accompanying drawings, some elements may be exaggerated, omitted, or schematically illustrated. Further, the size of each element does not completely reflect the actual size. In each drawing, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The embodiments are provided only to completely disclose the disclosure and inform those skilled in the art of the scope of the disclosure, and the disclosure is defined only by the scope of the appended claims. Throughout the specification, the same or like reference numerals designate the same or like elements.

Here, it will be understood that combinations of blocks in flowcharts or process flow diagrams may be performed by computer program instructions. Because these computer program instructions may be loaded into a processor of a general purpose computer, a special purpose computer, or another programmable data processing apparatus, the instructions, which are performed by a processor of a computer or another programmable data processing apparatus, create units for performing functions described in the flowchart block(s). The computer program instructions may be stored in a computer-usable or computer-readable memory capable of directing a computer or another programmable data processing apparatus to implement a function in a particular manner, and thus the instructions stored in the computer-usable or computer-readable memory may also be capable of producing manufacturing items containing instruction units for performing the functions described in the flowchart block(s). The computer program instructions may also be loaded into a computer or another programmable data processing apparatus, and thus, instructions for operating the computer or the other programmable data processing apparatus by generating a computer-executed process when a series of operations are performed in the computer or the other programmable data processing apparatus may provide operations for performing the functions described in the flowchart block(s).

In addition, each block may represent a portion of a module, segment, or code that includes one or more executable instructions for executing specified logical function(s). It should also be noted that in some alternative implementations, functions mentioned in blocks may occur out of order. For example, two blocks illustrated successively may actually be executed substantially concurrently, or the blocks may sometimes be performed in a reverse order according to the corresponding function.

Here, the term "unit" used in the disclosure means a software component or hardware component such as FPGA or ASIC, and performs a specific function. However, the term "unit" is not limited to software or hardware. The "unit" may be formed so as to be in an addressable storage medium, or may be formed so as to operate one or more processors. Thus, for example, the term "unit" may refer to components such as software components, object-oriented software components, class components, and task components, and may include processes, functions, attributes, procedures, subroutines, segments of program code, drivers, firmware, micro codes, circuits, data, a database, data structures, tables, arrays, or variables. A function provided by the components and "units" may be associated with the smaller number of components and "units", or may be further divided into additional components and "units". Furthermore, the components and "units" may be embodied to reproduce one or more CPUs in a device or security multimedia card. In addition, in an embodiment "units" may include one or more processors.

The detailed description of embodiments of the disclosure is directed to New RAN (NR) as a radio access network and packet core as a core network (5G system, 5G Core Network, or new generation core (NG Core)) which are specified in the 5G mobile communication standards disclosed by the 3rd generation partnership project long term evolution (3GPP LTE) that is a mobile communication standardization group, but based on determinations by those skilled in the art, the main idea of the disclosure may be applied to other communication systems having similar backgrounds through some modifications without significantly departing from the scope of the disclosure.

In a 5G system, in order to support network automation, a network data collection and analysis function (NWDAF), which is a network function that provides a function of analyzing and providing data collected from a 5G network, may be defined. The NWDAF can collect/storage/analyze information from the 5G network to provide the result to an unspecified network function (NF), and the analysis result can be used independently in each NF.

In the following description, the disclosure will be described using terms and names defined in the 3GPP standards (5G, NR, LTE, or other similar system standards) for the convenience of description. However, the disclosure is not limited by these terms and names, and may be applied in the same way to systems that conform other standards.

Further, in the following description, terms for identifying access nodes, terms with reference to network entities, terms with reference to messages, terms with reference to interfaces between network entities, terms with reference to various identification information, and the like are illustratively used for the sake of convenience. Therefore, the disclosure is not limited by the terms as used below, and other terms with reference to subjects having equivalent technical meanings may be used.

In order to meet the increasing demand with respect to wireless data traffic after the commercialization of 4G communication systems, efforts have been made to develop improved 5G communication systems (new radio (NR)). In order to achieve a high data transmission rate, 5G communication systems have been designed to operate in millimeter wave (mmW) frequency bands (e.g., 28 GHz bands). In order to reduce propagation path loss of radio waves and increase a propagation distance of radio waves in millimeter wave frequency bands, in 5G communication systems, technologies such as beamforming, massive multiple-input multiple-output (MIMO), full dimensional MIMO (FD-MIMO), array antenna, analog beamforming, and large scale antenna are being discussed. Additionally, in 5G communication systems, unlike LTE, various subcarrier spacings (SCS) including 15 kHz, 30 kHz, 60 kHz, and 120 kHz are supported, and physical control channels use polar coding and physical data channels uses low density parity check (LDPC). Additionally, not only DFT-S-OFDM but also CP-OFDM are used as a waveform for uplink transmission. While LTE supports hybrid ARQ (HARQ) retransmission in units of transport blocks (TBs), 5G may additionally support HARQ retransmission based on a code block group (CBG) composed of multiple code blocks (CBs).

Also, in order to improve networks of systems, in 5G communication systems, technologies such as evolved small cell, advanced small cell, cloud radio access network (cloud RAN), ultra-dense network, device-to-device (D2D) communication, wireless backhaul, vehicle-to-everything (V2X) network, cooperative communication, coordinated multi-points (CoMP), and interference cancellation are being developed.

Meanwhile, the Internet is evolving from a human-centered connection network through which humans create and consume information to an Internet of Things (IoT) network through which distributed elements such as objects exchange and process information. Internet of Everything (IoE) technology, which is a combination of IoT technology and big data processing technology through connection with a cloud server, is also emerging. In order to implement the IoT, technology elements such as sensing technology, wired/wireless communication and network infrastructure, service interface technology, and security technology are required, and thus technology for inter-object connection, such as a sensor network, machine to machine (M2M) communication, or machine-type communication (MTC), has recently been studied. In an IoT environment, intelligent Internet technology (IT) services that collect and analyze data generated by connected objects and create new value in human life may be provided. The IoT may be applied to fields such as smart homes, smart buildings, smart cities, smart cars or connected cars, smart grids, health care, smart home appliances, and advanced medical services through convergence and integration of existing information technology (IT) and various industries.

Accordingly, various attempts are being made to apply a 5G communication system to the IoT network. For example, sensor networks, machine to machine (M2M) communication, and machine type communication (MTC) technologies are implemented using 5G communication technologies including beamforming, MIMO, and array antennas. The application of the Cloud radio access network (RAN) as the above-described big data processing technique is an example of convergence between the 5G and IoT technologies. As such, in a communication system, a plurality of services may be provided to a user, and to provide the plurality of services to the user, a method of providing each of the plurality of services in the same time period according to the characteristics and an apparatus using the method is required. Various services provided by the 5G communication system have been studied and one of the services is a service that meets low latency and high reliability requirements. In addition, the demand for mobile services is exploding, and location-based services (LBS), which is mainly driven by two main requirements, i.e., emergency services and commercial applications, are rapidly growing. In particular, in case of communication using a sidelink, an NR sidelink system supports unicast communication, groupcast (or multicast) communication, and broadcast communication between terminals. In addition, unlike LTE sidelink that aims to transmit and receive basic safety information required for driving a vehicle on a road, NR sidelink aims to provide more advanced services such as platooning, advanced driving, extended sensor, and remote driving.

In particular, in NR sidelink, positioning (location measurement) may be performed through a sidelink between terminals. In other words, a method for measuring a location of a terminal by using a positioning signal transmitted through a sidelink may be considered. A method for measuring a location of a terminal by using a positioning signal transmitted through a DL and a UL between a terminal and a base station is feasible only in case where the terminal is within the coverage area of the base station. However, by introducing sidelink positioning, the location of a terminal may be measured even in case where the terminal is out of a coverage area of a base station. The disclosure proposes a positioning method using round trip time (RTT) in the sidelink. The positioning signal for performing RTT in a sidelink is called sidelink positioning reference signal (S-PRS). However, it should be noted that this can be replaced by other terms. First, a procedure for performing RTT on a sidelink must be defined. Additionally, a method for transmitting S-PRS needs to be redesigned to ensure sidelink positioning accuracy. Specifically, a resource allocation method for S-PRS transmission needs to be different from the resource allocation method for existing data transmission. Additionally, when S-PRS is transmitted, the corresponding physical layer structure may be different from the existing one. Also, the information needed to perform RTT needs to be exchanged between sidelink terminals. In the disclosure, positioning may be performed in a sidelink by proposing the methods described above.

The embodiment of the disclosure is proposed to support the above-described scenario, and in particular, aims to provide a method and apparatus for measuring a location (positioning) of a terminal in a sidelink.

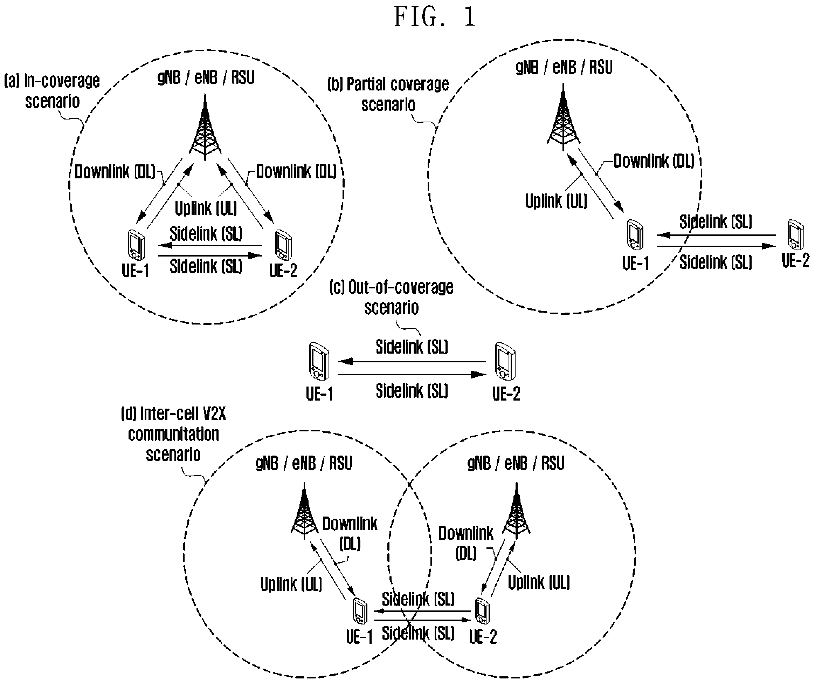

FIG. 1 is a diagram illustrating a system according to an embodiment of the disclosure.

With reference to FIG. 1, (A) in FIG. 1 illustrates all user equipment (UE-1 and UE-2), performing communication via a sidelink being located within the coverage area of a base station (in-coverage (IC)). All of the terminals are able to receive data and control information from the base station through a downlink (DL) or transmit data and control information to a base station through an uplink (UL). Herein, the data and control information may be data and control information for sidelink communication. The data and control information may also be data and control information for general cellular communication. In addition, the terminals may transmit/receive data and control information for corresponding communication through a sidelink (SL).

With respect to FIG. 1, (B) in FIG. 1 illustrates an example in which, among the terminals, the UE-1 is located within the coverage area of the base station and the UE-2 is located outside the coverage area of the base station. That is, (B) in FIG. 1 illustrates an example of partial coverage (PC) in which only some terminals (e.g., only UE-2) are located outside the coverage area of the base station. The terminal (UE-1), which is located within the coverage area of the base station, may receive data and control information from the base station through a DL or transmit data and control information to the base station through a UL. The terminal (UE-2), which is located outside the coverage area of the base station, may not receive data and control information from the base station through a DL, and may not transmit data and control information to the base station through a UL. The terminal (UE-2) may transmit/receive data and control information for corresponding communication to/from the terminal (UE-1) through an SL.

With respect to FIG. 1, (C) in FIG. 1 illustrates an example in which all of the UEs are located outside the coverage area of the base station (out-of-coverage (OOC)). Accordingly, the terminals (UE-1, UE-2) may not receive data and control information from the base station through a DL, and also may not transmit data and control information to the base station through a UL. The terminals (UE-1, UE-2) may transmit/receive data and control information through an SL.

With respect to FIG. 1, (D) in FIG. 1 illustrates a scenario example in which sidelink communication is performed between the terminals (UE-1, UE-2), which are each located in different cells. Particularly, (D) in FIG. 1 illustrates a case in which the terminals (UE-1, UE-2) are connected to different respective base stations (RRC connected state), or are camping on the respective base stations (RRC disconnected state or an RRC idle state). In this case, the terminal (UE-1) may be a transmitting terminal and the terminal (UE-2) may be a receiving terminal in an SL. Alternatively, the terminal (UE-1) may be a receiving terminal and the terminal (UE-2) may be a transmitting terminal in the SL. The terminal (UE-1) may receive a system information block (SIB) from a base station to which the UE-1 is connected (or on which the UE-1 camps), and the terminal (UE-2) may receive an SIB from another base station to which the UE-2 is connected (or on which the UE-2 camps). In this case, an existing SIB may be used as the SIB, or an SIB separately defined for sidelink communication may be used as the SIB. In addition, information of the SIB received by the terminal (UE-1) and information of the SIB received by the terminal (UE-2) may be different from each other. Accordingly, in order to perform sidelink communication between the terminals (UE-1, UE-2) located in different cells, a method for interpreting SIB information transmitted from different cells may be additionally required by unifying the information or by signaling the information.

Although FIG. 1 illustrates an SL system including two terminals (UE-1, UE-2), for convenience of description, the disclosure is not limited thereto and communication may be performed between more than two terminals. In addition, an interface (a UL and a DL) between a base station and terminals may be referred to as a Uu interface, and an SL communication between terminals may be referred to as a PC5 interface. Therefore, in the disclosure, these terms may be interchangeably used, Meanwhile, a terminal may refer to a general terminal and a terminal supporting vehicular-to-everything (V2X). Particularly, in the disclosure, a terminal may be a handset (e.g., a smart phone) of a pedestrian. Alternatively, a terminal may include a vehicle that supports vehicle-to-vehicle (V2V) communication, a vehicle that supports vehicle-to-pedestrian (V2P) communication, a vehicle that supports vehicle-to-network (V2N) communication, or a vehicle that supports vehicle-to-infrastructure (V2I) communication. In addition, a terminal in the disclosure may include a road side unit (RSU) equipped with terminal functions, an RSU equipped with base station functions, or an RSU equipped with some of base station functions and some of terminal functions. In addition, a base station according to an embodiment of the disclosure may be a base station that supports both V2X communication and general cellular communication, or a base station that supports only V2X communication. In this case, the base station may be a 5G base station (gNB), a 4G base station (eNB) or an RSU, Therefore, in the disclosure, a base station may also be referred to as an RSU.

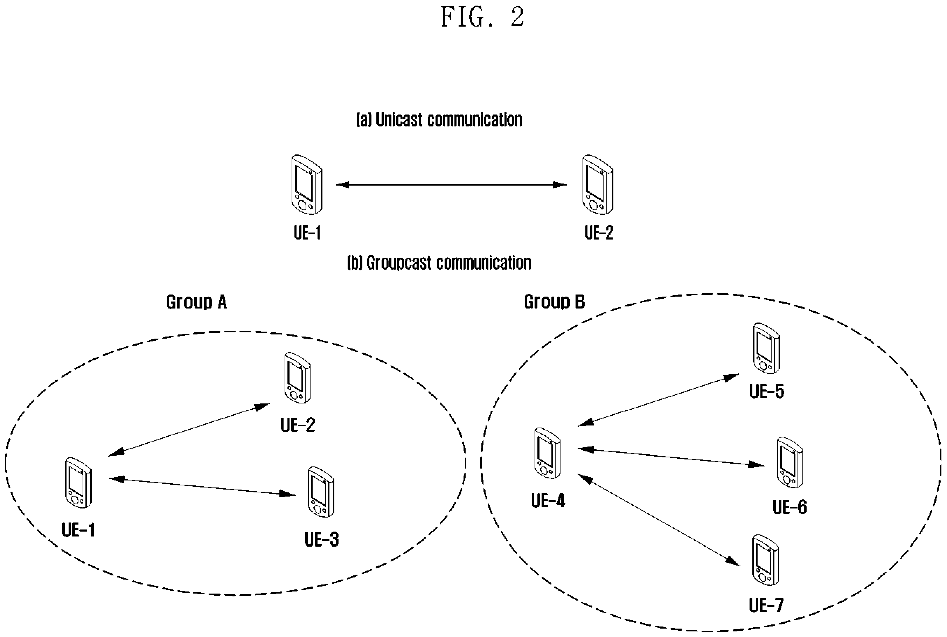

FIG. 2 is a diagram illustrating a communication method performed through a SL, according to an embodiment of the disclosure.

With respect to (A) in FIG. 2, a UE-1 201 (e.g., a TX terminal) and UE-2 202 (e.g., an RX terminal) may perform one-to-one communication, which may be referred to as unicast communication. In an SL, capability information and configuration information may be exchanged between the terminals through PC5-RRC defined in a unicast link between the terminals. Also, the configuration information may be exchanged through a SL medium access control (MAC) control element (CE) defined in the unicast link between the terminals.

With respect to (B) in FIG. 2, the TX terminal and RX terminal may perform one-to-many communication, which may be referred to as groupcast or multicast communication. In (B) in FIG. 2, UE-1 211, UE-2 212, and UE-3 213 constitute one group (Group A) to perform groupcast communication, and UE-4 214, UE-5 215, UE-6 216, and UE-7 217 constitute another group (Group B) to perform groupcast communication. Each terminal performs groupcast communication only within the group to which the terminal belongs, and communication between different groups may be performed through unicast, groupcast, or broadcast communication. (B) in FIG. 2 illustrates that two groups (Group A, Group B) are formed, but the disclosure is not limited thereto.

Meanwhile, although not illustrated in FIG. 2, the terminals may perform broadcast communication in SL. Broadcast communication refers to a case in which data and control information transmitted by a transmitting terminal through SL are received by all other terminals. For example, assuming that, in (B) in FIG. 2 , the UE-1 211 is a transmitting terminal for broadcast, all other terminals (UE-2 212, UE-3 213, UE-4 214, UE-5 215, UE-6 216, and UE-7 217) may receive data and control information transmitted by UE-1 211.

Unlike LTE V2X, support in which a vehicle terminal transmits data to only one specific node through unicast and support in which a vehicle terminal transmits data to a plurality of specific nodes through groupcast may be considered in NR V2X. For example, such unicast and groupcast techniques may be useful for a service scenario, such as platooning being a technique that connects two or more vehicles via a network to drive them as a cluster. Particularly, a leader node of a group connected through platooning may need unicast communication to control a particular node, and may need groupcast communication to simultaneously control a group consisting of plurality of particular nodes.

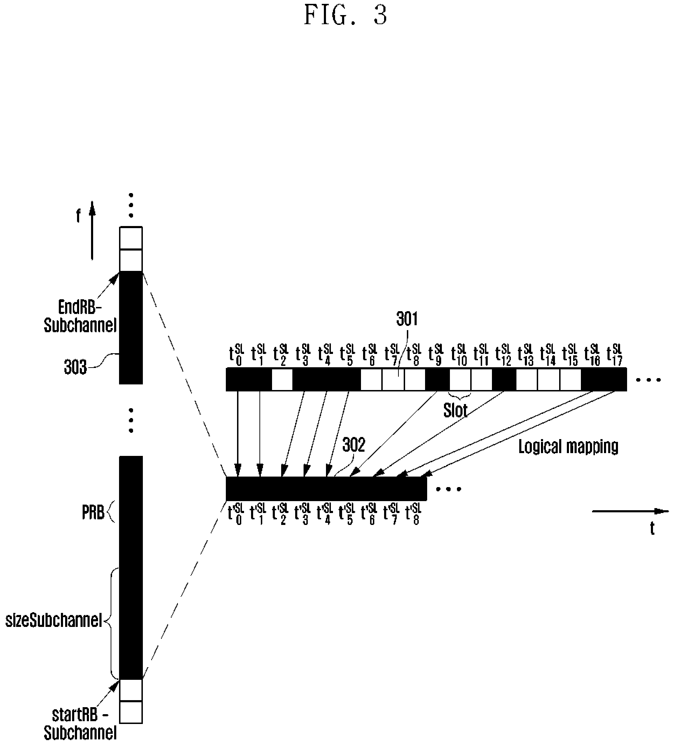

FIG. 3 is a diagram for explaining a resource pool defined by a set (group) of resources on time and frequency used for transmission and reception of an SL, according to an embodiment of the disclosure.

In the resource pool, the resource allocation unit (resource granularity) of the time axis may be slot. In addition, the resource allocation unit of the frequency axis may be subchannel consisting of one or more physical resource blocks (PRBs). In the disclosure, an example in which the resource pool is discontinuously allocated on the time axis is described, but a resource pool may be continuously allocated on the time axis. In addition, in the disclosure, an example in which the resource pool is continuously allocated on the frequency axis is described, but a method for discontinuously allocating a resource pool on the frequency axis is not excluded from the disclosure.

With reference to FIG. 3, a case (301) in which a resource pool is discontinuously allocated on the time axis is illustrated. With respect to FIG. 3, a case in which granularity of resource allocation on the time axis consists of a slot is illustrated. First, a SL slot may be defined within slots used for a UL. Particularly, the length of symbols used for an SL in one slot may be configured in SL bandwidth part (BWP) information. Therefore, among the slots used for the UL, slots in which the length of symbols configured as an SL is not guaranteed are unable to serve as SL slots. In addition, slots in which a sidelink synchronization signal block (S-SSB) is transmitted are excluded from the slots belonging to the resource pool.

With reference to 301, a set of slots that may be used for an SL on the time axis except for such slots is illustrated as ( $t_0^{SL}, t_1^{SL}, t_2^{SL}, \cdots$ ). The shaded portions in 301 represent SL slots belonging to the resource pool. The SL slots belonging to the resource pool may be (pre-)configured in resource pool information through a bitmap.

With respect to 302, the set (group) of the SL slots belonging to the resource pool on the time axis is illustrated as ( $t_0'^{SL}, t_1'^{SL}, t_2'^{SL}, \cdots$ ).

In the disclosure, (pre-)configuration may refer to configuration information, which is pre-configured and then pre-stored in a terminal, or may refer to a case in which a terminal is configured by a base station in a cell-common manner. Here, cell-common may mean that terminals in a cell receive the same information configuration from a base station. In this case, the terminal may consider a method for receiving a sidelink system information block (SL-SIB) from the base station and obtaining cell-common information.

In addition, (pre-)configuration may refer to a case in which a terminal is configured in a UE-specific manner after an RRC connection with a base station is established. Here, UE-specific manner may be replaced with UE-dedicated manner, and may mean that each terminal receives configuration information with a particular value. In this case, the terminal may consider a method for receiving an RRC message from the base station and obtaining UE-specific information.

In addition, a method for performing (pre-) configuration in resource pool information, and a method for performing (pre-) configuration not in resource pool information may be considered. In a case in which (pre-)configuration is performed in resource pool information, all terminals operating in a corresponding resource pool may operate according to common configuration information, except for the terminals configured in a UE-specific manner after an RRC connection with the base station is established. Meanwhile, the method for performing (pre-)configuration not in resource pool information is basically to perform the configuration independently of the resource pool configuration information. For example, one or more modes may be (pre-)configured in a resource pool (e.g., A, B, and C), and which one of the (pre-)configured modes to use in the resource pool (e.g., A, B, or C) may be indicated through information (pre-)configured independently of resource pool configuration information. In addition, in SL unicast transmission, (pre-)configuration may be configured through PC5-RRC. Alternatively, a method in which (pre-)configuration is configured through MAC-CE may also be considered. It is noted that performing (pre-)configuration in the disclosure means that all of the cases described above may be applied.

With reference to 303 in FIG. 3, a case in which a resource pool is continuously allocated on the frequency axis is illustrated. Resource allocation in the frequency axis may be configured in SL bandwidth part (BWP) information, and may be performed in the unit of subchannels.

A subchannel may be defined as a resource allocation unit on the frequency axis including one or more physical resource blocks (PRBs). That is, a subchannel may be defined as an integer multiple of PRB,

With reference to 303, a subchannel may be composed of 5 consecutive PRBs, and the size of a subchannel (sizeSubchannel) may be the size of 5 consecutive PRBs. However, the content illustrated in the drawing is only an example, and the size of a subchannel may be configured differently and one subchannel is composed of consecutive PRBs in general, but a subchannel is not necessarily composed of consecutive PRBs.

A subchannel may be a basic unit of resource allocation for a physical sidelink shared channel (PSSCH). In 303, startRB-Subchannel may indicate the starting position of a subchannel on the frequency axis in a resource pool. In case where resource allocation on the frequency axis is performed in units of subchannels, resources on the frequency axis may be allocated according to the indices of resource blocks (RBs) (startRB-subchannel) at which subchannels start, information about the number of PRBs in one subchannel (sizeSubchannel), and configuration information about the total number of subchannels (numSubchannel). In this case, information about startRB-Subchannel, sizeSubchannel, and numSubchannel may be (pre-)configured in frequency-axis resource pool information.

The methods for allocating transmission resources in an SL include a method for receiving SL transmission resources from a base station in case where a terminal is within the coverage area of the base station.

Hereinafter, this method is referred to as Mode 1. In other words, Mode 1 may represent a method for a base station to allocate resources used for SL transmission to RRC connected terminals using a dedicated scheduling scheme.

Since Mode 1 enables a base station to manage resources of an SL, it is effective in interference management and resource pool management.

On the other hand, the methods for allocating transmission resources in an SL include a method for allocating transmission resources through direct sensing by a terminal in an SL. Hereinafter, this method is referred to as Mode 2. In case of Mode 2, it may be referred to as UE autonomous resource selection. Unlike Mode 1 in which a base station directly participates in resource allocation, in Mode 2, a transmitting terminal autonomously selects resources through a sensing and resource selection procedure defined based on a (pre-)configured resource pool, and transmits data through the selected resources.

Next, when transmission resources are allocated through Mode1 or Mode2, the terminal may transmit/receive data and control information through an SL. Here, the control information may include sidelink control information (SCI) format 1-A as 1st stage sidelink control information (SCI) transmitted through a physical sidelink control channel (PSCCH). In addition, the control information may include at least one of SCI format 2-A and SCI format 2-B, as a 2nd stage SCI transmitted through a physical sidelink shared channel (PSSCH).

Hereinafter, a method for positioning to measure a location of the terminal using a positioning reference signal (PRS) transmitted through a DL and a UL of a terminal and base station is described.

In the disclosure, the method using a positioning signal transmitted through a DL and a UL of a terminal and base station is referred to as radio access technology (RAT)-dependent positioning. In addition, other positioning methods may be classified as RAT-independent positioning. Particularly, in case of an LTE system, as a RAT-dependent positioning scheme, methods such as observed time difference of arrival (OTDOA), uplink time difference of arrival (UTDOA), and enhanced cell identification (E-CID) may be used. In an NR system, methods such as downlink time difference of arrival (DL-TDOA), downlink angle-of-departure (DL-AOD), multi-round trip time (multi-RTT), NR E-CID, uplink time difference of arrival (UL-TDOA), and uplink angle-of-arrival (UL-AOA) may be used. On the other hand, RAT-independent positioning schemes may include assisted global navigation satellite systems (A-GNSS), a sensor, a wireless local area network (WLAN), and Bluetooth.

Meanwhile, the disclosure focuses on RAT-dependent positioning methods supported through, particularly, an SL. In case of an interface between a base station and terminals (UP and DL, hereinafter referred to as Uu), RAT-dependent positioning is available only in case where a terminal is within the coverage area of a base station. However, it is noted that RAT-dependent positioning of the SL may not be limited to a case where the terminal is within the base station coverage. In case of RAT-dependent positioning in Uu, positioning protocols such as LTE positioning protocol (LPP), LTE positioning protocol annex (LPPa), and NR positioning protocol annex (NRPPa) can be used. First, LPP is a positioning protocol defined between a terminal and a location server (LS), and LPPa and NRPPa are considered as protocols defined between a base station and an LS. Here, an LS is an entity that manages location measurement, and may perform a location management function (LMF). In addition, the LS may be referred to as an LMF or other names. In both LTE and NR systems, LPP is supported, and the following roles for positioning may be performed through LPP.

* positioning capability exchange
* assistance data transmission
* location information transmission
* error handling
* abort

It is noted that the terminal and LS perform the above roles through LPP, and the base station may perform the role of allowing the terminal and LS to exchange positioning information. In this case, the exchange of positioning information through LPP may be made transparent to the base station. This may mean that the base station is not involved in exchanging positioning information between the terminal and the LS.

In the positioning capability exchange, the terminal may exchange supportable positioning information with the LS. For example, the supportable positioning information may indicate whether a positioning method supported by the terminal is UE-assisted positioning, UE-based positioning, or both. Here, the UE-assisted positioning is a scheme in which the terminal transmits only a measured value for a positioning scheme to the LS based on a received positioning signal without directly measuring the absolute position of the terminal, and the absolute position of the terminal means a scheme calculated by the LS. Here, the absolute position may refer to two-dimensional (x,y) and three-dimensional (x,y,z) coordinate position information of the terminal based on longitude and latitude. On the other hand, the UE-based positioning may be a scheme in which the terminal may directly measure the absolute position of the terminal, and for this, the terminal needs to receive a positioning signal, together with position information of the source of the positioning signal.

While an LTE system supports only the UE-assisted schemes, an NR system may support both the UE-assisted positioning and the UE-based positioning. Meanwhile, the assistance data transmission may be a significantly important factor in positioning, to accurately measure the location of the terminal. Particularly, in the assistance data transmission, the LS may provide the terminal with configuration information about the positioning signal, information about candidate cells and transmission reception points (TRPs) to receive the positioning signal, and the like. Particularly, in case where DL-TDOA is used, the information about the candidate cells and TRPs to receive the positioning signal may be information about reference cells, reference TRPs, neighbor cells, and neighbor TRPs. In addition, a plurality of candidates for neighbor cells and neighbor TRPs may be provided, together with information about a preferred cell and TRP to be selected by the terminal to measure the positioning signal. In order for the terminal to accurately measure the location, it is necessary to properly select information about candidate cells and TRPs to be used as a reference. For example, when a channel for a positioning signal received from a corresponding candidate cell and TRP is a line-of-sight (LOS) channel, i.e., a channel having fewer non-LOS (NLOS) channel components, the accuracy of positioning measurement may increase. Therefore, in case where the LS provides the terminal with information about candidate cells and TRPs, which are the reference for performing positioning by collecting various pieces of information, the terminal may perform more accurate positioning measurement.

Next, the location information transmission may be performed through LPP. The LS may request location information from the terminal, and the terminal may provide measured location information to the LS in response to the corresponding request. In the UE-assisted positioning, the corresponding location information may be a measured value with respect to a positioning scheme based on a received positioning signal. On the other hand, in the UE-based positioning, the corresponding location information may be two-dimensional (x,y) and three-dimensional (x,y,z) coordinate position values of the terminal. When the LS requests the location information from the terminal, the LS may include required accuracy, response time, and the like, in positioning quality-of-service (QoS) information. In case where the corresponding positioning QoS information is requested, the terminal needs to provide the LS with the measured location information to satisfy the corresponding accuracy and response time, and, in case where it is impossible to satisfy the QoS, the terminal may consider error handling and abort. However, this is only an example, and error handling and abort may be performed on positioning in other cases than those in which it is impossible to satisfy QoS.

Meanwhile, a positioning protocol defined between the base station and the LS may be referred to as LPPa in an LTE system, and the following functions may be performed between the base station and the LS.

* E-CID location information transmission
* OTDOA information transmission
* General error state reporting
* assistance information transmission

In addition, in case of the positioning protocol defined between the base station and the LS, it may be referred to as NRPPa in an NR system, and include the roles performed by LPPa, and the following functions may be additionally performed between the base station and the LS.

* Positioning information transmission
* Measurement information transmission
* TRP information transmission

Unlike in an LTE system, in an NR system, more positioning techniques are supported. Accordingly, various positioning techniques may be supported through the positioning information transmission. For example, positioning measurement may be performed by a base station through a positioning sounding reference signal (SRS) transmitted by a terminal. Therefore, with the positioning information, information related to positioning SRS configuration and activation/deactivation may be exchanged between the base station and the LS. Then, the measurement information transmission is a function of exchanging, between the base station and the LS, information related to multi-RTT, UL-TDOA, and UL-AOA, which are not supported in the LTE system. Finally, the positioning of TRP information transmission has been performed on based on a cell in an LTE system, but in an NR system, positioning may be performed based on TRP, so information related to positioning based on TRP may be exchanged.

Entities performing positioning-related configuration and entities calculating positioning for measuring a location of a terminal in an SL may be classified into the following three types:

* UE (no LS)
* LS (through BS)
* LS (through UE)

First, in the above, the LS denotes a location server, the base station (BS) denotes a base station such as a gNB or eNB, and the UE denotes a terminal performing transmission and reception through an SL. As described above, the terminal performing transmission and reception through an SL may be a vehicle terminal or a pedestrian terminal.

In addition, the terminal performing transmission and reception through an SL may include a road side unit (RSU) having terminal functions, an RSU having base station functions, or an RSU having some of base station functions and some of terminal functions. In addition, the terminal performing transmission and reception through an SL may include a positioning reference unit (PRU), the location of which is known. The UE (no LS) may refer to an SL terminal not connected to the LS. The LS (through BS) denotes an LS connected to a base station. On the contrary, the LS (through UE) is a location server, and denotes an LS connected to the SL terminal. In the other words, the LS (through UE) indicates a case where the LS is available even in case where the terminal is not within the base station coverage. In this case, the LS (through UE) may be available only to specific terminals such as RSU or PRU, not general terminals. In addition, the terminal connected to the LS through an SL may be defined as a new type of device. In addition, only a particular terminal that supports UE capability and is connected to the LS may perform a function of connecting to the LS through an SL.

In Table 1 below, Cases 1 to 9 represent various combinations of an entity that performs positioning-related configuration and an entity that calculates positioning for measuring a location of a terminal on an SL. A terminal on which location measurement is required to be performed is referred to as a target terminal. In addition, a terminal, the location of which is known and which is able to provide positioning signal for measuring the location of the target terminal, is referred to as a positioning reference (PosRef) terminal. Accordingly, the PosRef terminal may have its own location information and may provide the location information of the terminal, together with sidelink positioning reference signal (S-PRS). In the other words, the PosRef terminal may be a terminal, the location thereof is already known. It is noted that the terms target terminal and PosRef terminal may be replaced with other terms. For example, the PosRef terminal may also be referred to as an anchor terminal. In addition, positioning configuration may be classified into UE-configured and network-configured schemes. In Table 1, in case in which positioning configuration is UE (no LS), a UE-configured scheme may be applied. The UE-configured scheme is advantageous in that positioning configuration may be performed even in case where the terminal is not within the network (base station) coverage. In Table 1, in cases in which positioning configuration is LS (through BS), a network-configured scheme may be applied. In the network-configured scheme, when a terminal is in the network coverage, positioning calculation and measurement information is reported to a base station and then measurement of the location of a target UE is performed by an LS connected to the base station. Thus, delay may occur due to signaling related to the location measurement, but more accurate location measurement may be possible. Finally, in Table 1, in case in which the positioning configuration is LS (through UE), it may not be classified as a network-configured method because the terminal is not configured through a base station within the network coverage. In addition, the LS connected to the terminal provides configurations, but in case in which they are not classified as being configured by the terminal, they may not be classified as UE-configured scheme. However, in case in which they are classified as being configured by the terminal, they may be classified as UE-configured scheme. Accordingly, the LS (through UE) may be named in a way other than the UE-configured or Network-configured scheme.

In addition, positioning calculation may be classified into two schemes, i.e., UE-assisted and UE-based schemes, as described above. In Table 1, a case in which positioning calculation is UE (no LS) may correspond to the UE-based scheme, and a case in which positioning calculation is LS (through BS) or LS (through UE) may generally correspond to the UE-assisted scheme. However, in case in which positioning calculation is LS (through UE) and the corresponding LS is interpreted as a terminal, the LS (through UE) may be classified as the UE-based scheme.

[Table 1]

|  | Positioning configuration | Positioning calculation |
|---|---|---|
| Case 1 | UE (no LS) | UE (no LS) |
| Case 2 | UE (no LS) | LS (through BS) |
| Case 3 | UE (no LS) | LS (through UE) |
| Case 4 | LS (through BS) | UE (no LS) |
| Case 5 | LS (through BS) | LS (through BS) |
| Case 6 | LS (through BS) | LS (through UE) |
| Case 7 | LS (through UE) | UE (no LS) |
| Case 8 | LS (through UE) | LS (through BS) |
| Case 9 | LS (through UE) | LS (through UE) |

In the above Table 1, positioning configuration information may include sidelink positioning reference signal (S-PRS) configuration information. The S-PRS configuration information may be pattern information of an S-PRS and information related to a time/frequency transmission location. In addition, in Table 1, the positioning calculation may be performed by the terminal receiving an S-PRS and performing measurement from the received S-PRS, and the positioning measurement and calculation method may vary depending on which positioning method is applied. Measurement of location information in an SL may be absolute positioning to provide two-dimensional (x,y) and three-dimensional (x,y, z) coordinate position values of a terminal, or relative positioning to provide relative two-dimensional or three-dimensional position information from another terminal. In addition, the location information in the SL may be ranging information including one of the distance and direction from another terminal. In case in which the meaning of ranging in the SL includes both distance and direction information, ranging may have the same meaning as that of relative positioning. Also, as a positioning method, sidelink time difference of arrival (SL-TDOA), sidelink angle-of-departure (SL-AOD), sidelink Multi-round trip time (SL Multi-RTT), sidelink round trip time (SL RTT), sidelink E-CID, sidelink angle-of-arrival (SL-AOA), or the like may be considered.

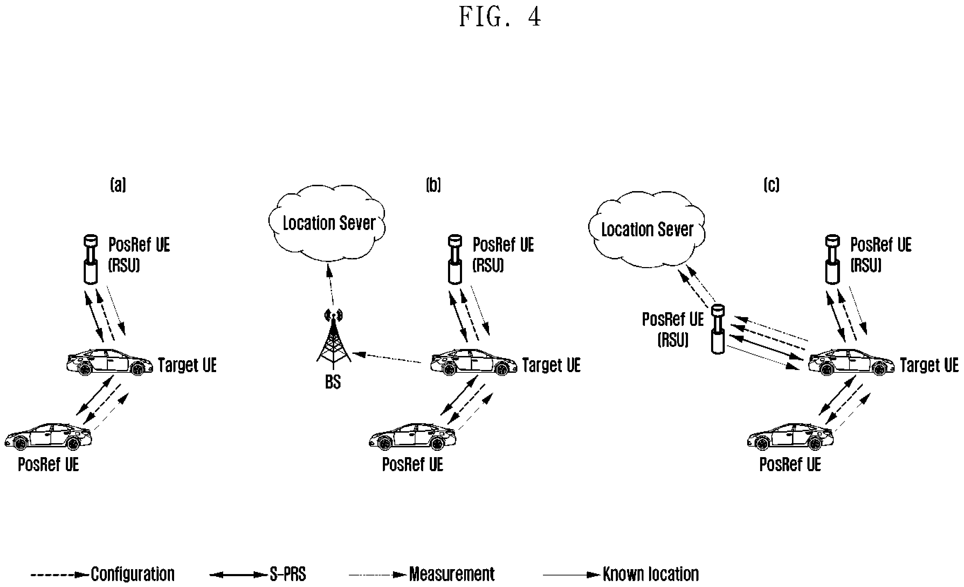

FIGS. 4 to 6 are diagrams for explaining a case of calculating the location of a terminal through a SL according to an embodiment of the disclosure. However, in the disclosure, the case of calculating the location of a terminal through a SL is not limited to the cases illustrated in FIGS. 4 to 6. In FIGS. 4 to 6, signaling of positioning configuration information is illustrated as a black dotted line. The transmission of S-PRS is illustrated as a light blue dotted line. It is noted that S-PRS transmission may be performed in two directions or one direction. Measured information for positioning or transmission of measured positioning information is illustrated as a red dotted line. Lastly, the transmission of location information known to the terminal (known location) is illustrated as a blue dotted line.

FIG. 4(A) illustrates an example of a case where an SL terminal without a connection to an LS provides positioning configuration and a target terminal without a connection to an LS performs positioning calculation. This may correspond to Case 1 in Table 1. In this case, the target terminal may broadcast, unicast, or group cast instructions for positioning-related configuration information to other terminals through an SL. Additionally, the target terminal may perform positioning calculation based on the provided positioning signal.

FIG. 4(B) illustrates an example of a case where an SL terminal that is not connected to an LS provides positioning configuration, and a target terminal is located within a network coverage and performs positioning calculation in the LS connected to a base station. This may correspond to Case 2 in Table 1. In this case, the target terminal may broadcast, unicast, or group cast instructions for positioning related configuration information to other terminals through an SL. Additionally, the target terminal performs positioning measurement based on the provided positioning signal, and because the target terminal is within a base station coverage, the measured positioning information may be reported to the base station. The corresponding measurement information is then reported to the LS connected to the base station, so the LS may perform positioning calculation.

FIG. 4(C) illustrates an example of a case where an SL terminal not connected to an LS provides positioning configuration and performs positioning calculation in the LS through an SL terminal connected to the LS. This may correspond to Case 3 in Table 1. In this case, a target terminal may broadcast, unicast, or group cast instructions for positioning related configuration information to other terminals through an SL. Additionally, the target terminal performs positioning measurement based on the provided positioning signal, and because the target terminal is within the SL coverage of the terminal connected to the LS, the measured positioning information may be reported to the terminal connected to the LS. In FIG. 4(C), the terminal connected to the LS is illustrated as a PosRef UE (RSU), but it is noted that it may be a terminal other than an RSU. The corresponding measurement information is then reported to the LS connected to the PosRef UE (RSU) so that the LS may perform positioning calculation.

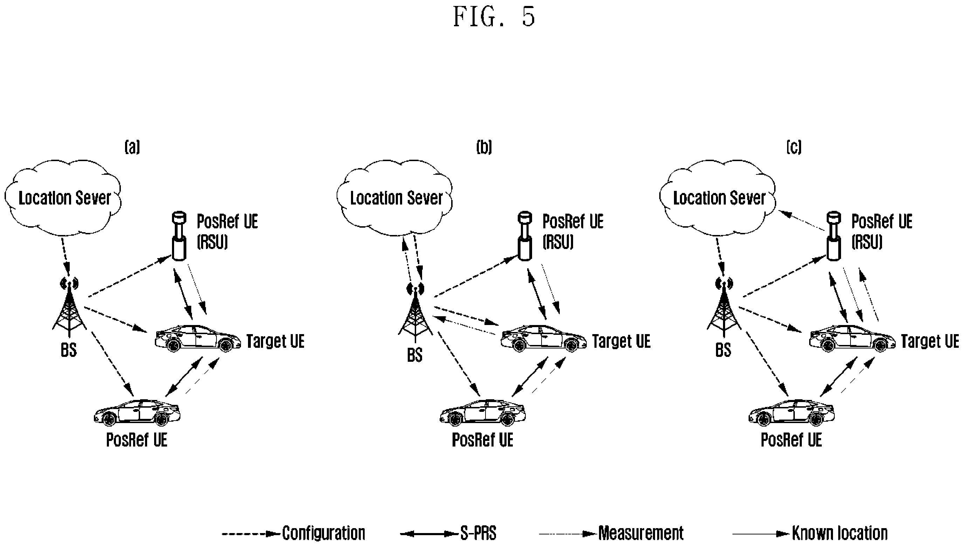

FIG. 5(A) illustrates an example where an SL terminal is located within a network coverage, positioning configuration is provided from an LS connected to a base station, and a target terminal without connection to the LS performs positioning calculation. This may correspond to Case 4 in Table 1. In this case, positioning configuration information may be provided from the LS connected to the base station using a positioning protocol such as LPP. Additionally, the target terminal may perform positioning calculation based on the provided configuration information and positioning signal.

FIG. 5(B) illustrates an example of a case where an SL terminal is located within a network coverage and positioning configuration is provided from an LS connected to a base station, and a target terminal is located within the network coverage and positioning calculation is performed at the LS connected to the base station. This may correspond to Case 5 in Table 1. In this case, positioning configuration information may be provided from the LS connected to the base station using a positioning protocol such as LPP. Additionally, the target terminal performs positioning measurement based on the provided configuration information and positioning signal, and because the target terminal is within the base station coverage, the measured positioning information may be reported to the base station. The measurement information is then reported to the LS connected to the base station, so the LS may perform positioning calculation.

FIG. 5(C) illustrates an example of a case where an SL terminal is located within a network coverage, positioning configuration is provided from an LS connected to a base station, and positioning calculation is performed at the LS through the SL terminal connected to the LS. This may correspond to Case 6 in Table 1. In this case, positioning configuration information may be provided from the LS connected to the base station using a positioning protocol such as LPP. In addition, the target terminal performs positioning measurement based on the provided configuration information and positioning signal, and because the target terminal is within the SL coverage of the terminal connected to the LS, the measured positioning information may be reported to the terminal connected to the LS. In FIG. 5(C), the terminal connected to the LS is illustrated as a PosRef UE (RSU), but it is noted that it may be a terminal other than an RSU. The corresponding measurement information is then reported to the LS connected to the PosRef UE (RSU) so that the LS may perform positioning calculation.

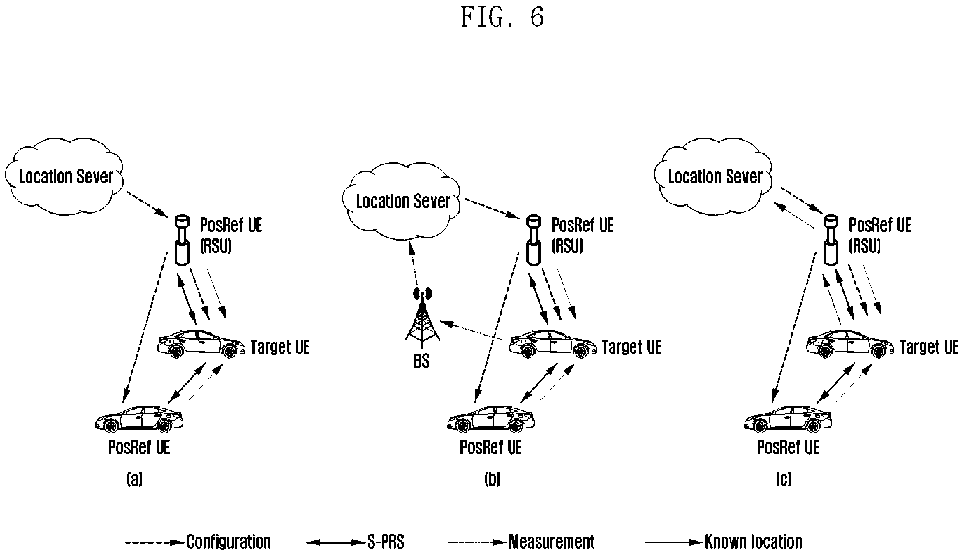

FIG. 6(A) illustrates an example of a case where an LS provides positioning configuration through an SL terminal connected to the LS, and a target terminal that is not connected to the LS performs positioning calculation. This may correspond to Case 7 in Table 1. In this case, a positioning protocol such as LPP may be used to provide positioning configuration information from the LS connected to the terminal. Additionally, the target terminal may perform positioning calculation based on the provided configuration information and a positioning signal.

FIG. 6(B) illustrates an example of a case where an LS provides positioning configuration through an SL terminal connected to the LS, and a target terminal is located within a network coverage and performs positioning calculation at the LS connected to the base station. This may correspond to Case 8 in Table 1. In this case, a positioning protocol such as LPP may be used to provide positioning configuration information from the LS connected to the terminal. Additionally, the target terminal may perform positioning measurement based on the provided configuration information and a positioning signal, and because the target terminal is within a base station coverage, the measured positioning information may be reported to the base station. The measurement information is then reported to the LS connected to the base station, so the LS may perform positioning calculation.

FIG. 6(C) illustrates an example of a case where an LS provides positioning configuration through an SL terminal connected to the LS and the LS performs positioning calculation through the SL terminal connected to the LS. This may correspond to Case 9 in Table 1. In this case, a positioning protocol such as LPP may be used to provide positioning configuration information from the LS connected to the terminal. In addition, the target terminal performs positioning measurement based on the provided configuration information and a positioning signal, and because the target terminal is within the SL coverage of the terminal connected to the LS, the measured positioning information may be reported to the terminal connected to the LS. In FIG. 6(C), the terminal connected to the LS is illustrated as a PosRef UE (RSU), but it is noted that it may be a terminal other than an RSU. The corresponding measurement information is then reported to the LS connected to the PosRef UE (RSU) so that the LS may perform positioning calculation.

The following embodiment describes a method for performing round trip time (RTT) using a sidelink positioning reference signal (S-PRS) transmitted through an SL.

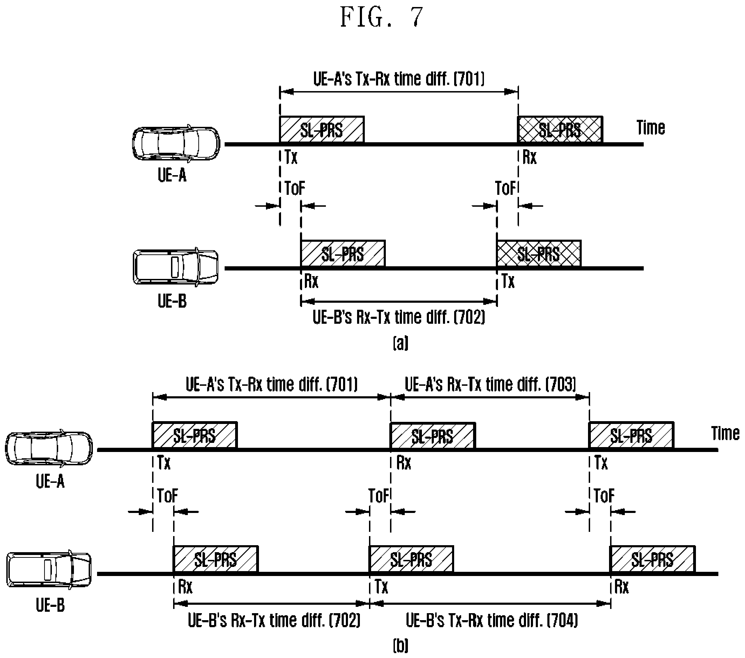

FIG. 7 is a diagram for explaining a case where positioning is performed using an RTT scheme according to an embodiment of the disclosure. With reference to FIG. 7, a UE-A and UE-B may correspond to a target terminal and PosRef terminal, respectively. However, in FIG. 7, the UE-A and UE-B are not limited to the target terminal and PosRef terminal, respectively. In other words, the UE-A may correspond to the PosRef terminal and the UE-B may correspond to the target terminal. In FIG. 7, a method (single RTT) in which the target terminal performs RTT as one pair with one PosRef terminal is illustrated. However, the target terminal may be able to perform the RTT with multiple PosRef terminals. In this case, unlike FIG. 7, there may be multiple pairs between the target terminal and one PosRef terminal, and this scheme may be called Multi-RTT. The Multi-RTT may be required for the target terminal to perform absolute positioning. Time of Flight (ToF) is calculated using the RTT scheme and a distance may be calculated using a relational expression of 'Speed = Distance/Time' or 'Distance = Speed x Time' or 'Time = Distance/Speed'. Here, ToF means time and the speed of light may be applied as speed.

First, a single sided RTT scheme is illustrated in FIG. 7(A). According to the single sided RTT, RTT measurement may be performed as the UE-A transmits a positioning signal to the UE-B and the UE-B transmits the positioning signal to the UE-A, as illustrated in FIG. 7(A). Specifically, the UE-A may calculate a time difference $T_{round}$ 701 between transmitting a positioning signal to the UE-B by the UE-A and receiving the positioning signal by the UE-A from the UE-B. The UE-B may calculate a time difference $T_{reply}$ 702 between receiving the positioning signal by the UE-B from the UE-A and transmitting the positioning signal to the UE-B by the UE-A. From this, the time of flight (ToF) may be calculated as shown in Equation 1 below.

【Equation 1】

$$ToF = \frac{(T_{round} - T_{reply})}{2}$$

In order to calculate Equation 1 above by the UE-A, the $T_{reply}$ information calculated by the UE-B needs to be indicated to the UE-A. In contrast, in order for the UE-B to calculate Equation 1 above, the $T_{round}$ information calculated by the UE-A needs to be indicated to the UE-B. A reference is made to a fourth embodiment below for details for indicating corresponding information.

Next, FIG. 7(B) illustrates a double sided RTT method. According to the double sided RTT, as illustrated in FIG. 7(B), the UE-A transmits a positioning signal to the UE-B, the UE-B transmits the positioning signal to the UE-A, and the UE-A transmits the positioning signal to the UE-B again, so that RTT measurement can be performed. Specifically, the UE-A may calculate a time difference $T_{round1}$ 701 between transmitting a positioning signal to the UE-B by the UE-A and receiving the positioning signal by the UE-A from UE-B. The UE-B may calculate a time difference $T_{reply1}$ 702 between receiving the positioning signal by the UE-B from UE-A and transmitting the positioning signal to the UE-A by the UE-B. Next, the UE-A may calculate a time difference $T_{reply2}$ 703 between receiving the positioning signal by the UE-A from the UE-B and transmitting the second positioning signal to the UE-B by the UE-A. The UE-B may calculate a time difference $T_{round2}$ 704 between transmitting the positioning signal to the UE-A by the UE-B and receiving a second positioning signal by the UE-B from the UE-A. From this, the time of flight (ToF) may be calculated as shown in Equation 2 below.

【Equation 2】

$$ToF = \frac{(T_{round1} \times T_{round2} - T_{reply1} \times T_{reply2})}{T_{round1} + T_{round2} + T_{reply1} + T_{reply2}}$$

In order to calculate Equation 2 above by the UE-A, the $T_{reply1}$ and $T_{round2}$ information calculated by the UE-B needs to be indicated to the UE-A. In contrast, in order for the UE-B to calculate Equation 2 above, the $T_{round1}$ and $T_{reply2}$ information calculated by the UE-A needs to be indicated to the UE-B. A reference is made to a fifth embodiment below for details for indicating corresponding information. Compared to the single sided RTT according to Equation 1 above, the double sided RTT according to Equation 2 has the advantage that the effect of clock drift in each terminal can be minimized and the accuracy of positioning can be improved. However, additional signal exchange may occur, resulting in additional delay in calculating the ToF. In the disclosure, the RTT method is not limited to the above two methods. In other words, the ToF may be calculated by additionally calculating $T_{reply}$ and $T_{round}$ through additional positioning signal exchange after $T_{reply2}$ and Tround2.

It is noted that one or more of the embodiments below may be used in combination with each other in the disclosure. In the disclosure, a terminal that can provide a positioning signal to measure the location of a target terminal is called a positioning reference (PosRef) terminal. The PosRef terminal may be a terminal of which location is known (known location) or may be a terminal of which location is unknown (unknown location). In case of the PosRef terminal of which location is known (known location), the corresponding location information may be delivered to the target terminal and the target terminal may be able to perform UE-based positioning. Although the disclosure proposes methods based on round trip time (RTT), it is noted that the proposed methods may be applied not only to RTT but also to other positioning methods.

<First Embodiment>

A first embodiment proposes a method for a terminal to configure and transmit a signal to measure its location through an SL.

First, whether a terminal is able to perform positioning through an SL, in other words, whether the terminal is capable of performing a positioning operation, may be determined by UE capability, and corresponding capability information may be transmitted to other terminals and base station. In this case, whether the terminal is capable of performing positioning through the SL may also be determined by whether an SL positioning signal is transmitted/received. In this case, the SL positioning signal may be a sidelink positioning reference signal (S-PRS) to be transmitted and received for positioning measurement. For example, a certain SL terminal may be a terminal capable of both transmitting and receiving an S-PRS. In addition, a certain SL terminal may be a terminal capable of transmitting an S-PRS but incapable of receiving an S-PRS. In addition, a certain SL terminal may be a terminal capable of receiving an S-PRS but incapable of transmitting an S-PRS. In addition, a certain SL terminal may be a terminal incapable of neither transmitting nor receiving an S-PRS, Whether a terminal is capable of transmitting/receiving an S-PRS may be defined in UE capability. In the disclosure, the S-PRS signal is not limited to a certain signal. For example, the corresponding signal may be an SL synchronization signal, a reference signal defined in the SL (e.g., CSI-RS, DMRS), or a newly defined reference signal for SL positioning. Alternatively, a certain transmission signal may be considered as S-PRS. For example, a signal through which an SL terminal requests channel state information (CSI) from another terminal may be S-PRS. When requesting the CSI from the SL to the 2nd SCI, channel state information reference signal (CSI-RS) may be transmitted through PSSCH. Therefore, transmission of CSI-RS may be interpreted as an S-PRS signal. Additionally, when the terminal that has received the CSI request performs CSI feedback, the corresponding signal may be used as S-PRS.

The CSI feedback may be transmitted to PSSCH through MAC-CE. As another example, when an SL terminal requests HARQ feedback from another terminal, the corresponding signal may be S-PRS. When HARQ feedback is activated from the SL to the 2nd SCI, it may be interpreted as requesting the HARQ feedback. Additionally, when the terminal that has received the HARQ feedback request performs HARQ feedback through physical sidelink feedback channel (PSFCH), the corresponding signal may be used as S-PRS.

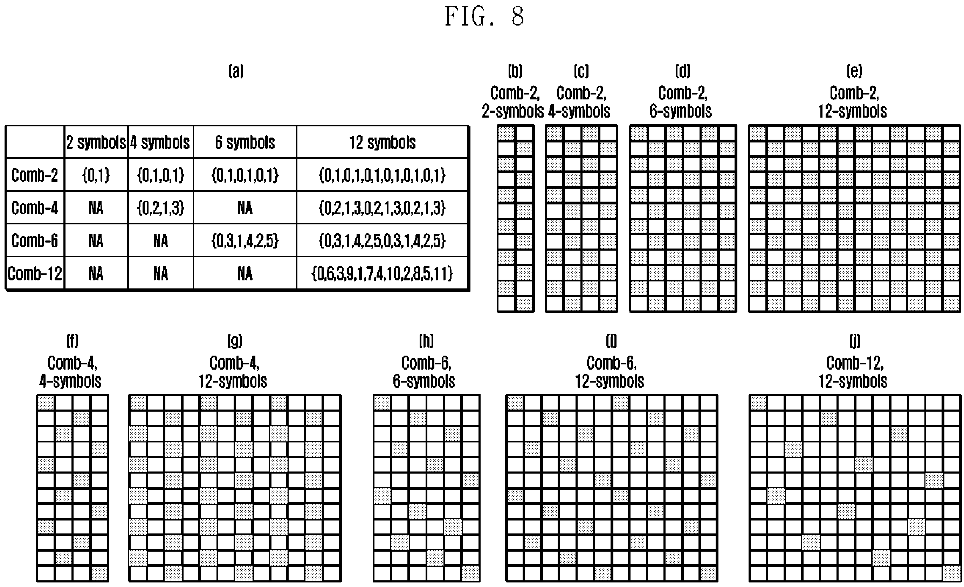

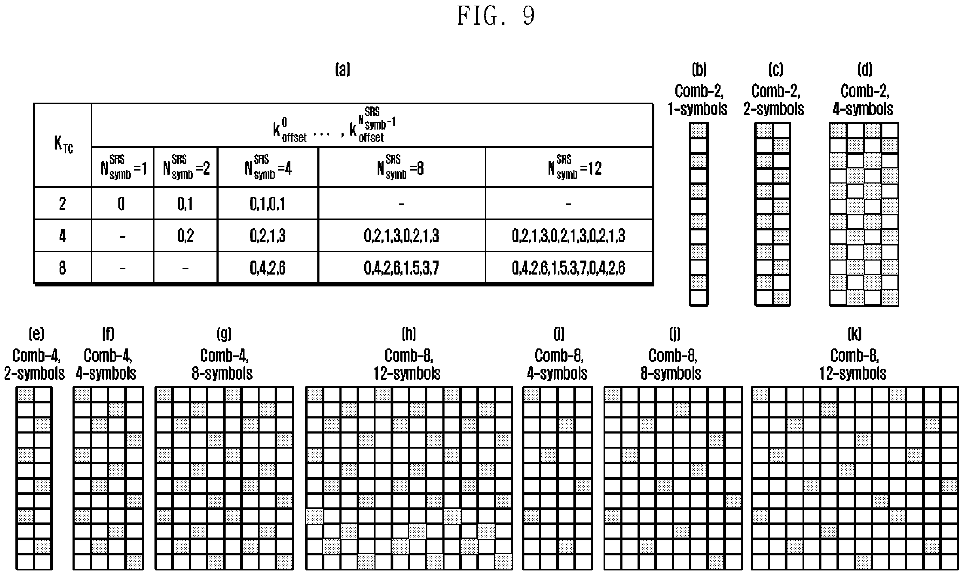

FIGS. 8 and 9 are diagrams for explaining the pattern of S-PRS, which is a sidelink positioning signal, according to an embodiment of the disclosure.

First, FIG. 8 shows a method considering that patterns based on DL PRS are reused in S-PRS. According to FIG. 8(A), Comb pattern and number of PRS symbols supported in DL PRS may be reused in S-PRS. Specifically, the S-PRS pattern for Comb-2 and the number of PRS symbols = 2 is illustrated in FIG. 8(B). The S-PRS pattern for Comb-2 and the number of PRS symbols = 4 is illustrated in FIG. 8(C). The S-PRS pattern for Comb-2 and the number of PRS symbols = 6 is illustrated in FIG. 8(D). The S-PRS pattern for Comb-2 and the number of PRS symbols = 12 is illustrated in FIG. 8(E). The S-PRS pattern for Comb-4 and the number of PRS symbols = 4 is illustrated in FIG. 8(F). The S-PRS pattern for Comb-4 and the number of PRS symbols = 12 is illustrated in FIG. 8(G). The S-PRS pattern for Comb-6 and the number of PRS symbols = 6 is illustrated in FIG. 8(H). The S-PRS pattern for Comb-6 and the number of PRS symbols = 12 is illustrated in FIG. 8(I). The S-PRS pattern for Comb-12 and the number of PRS symbols = 12 is illustrated in FIG. 8(J). According to FIG. 8, S-PRS may have various symbol lengths, and the start position and length of the symbol through which S-PRS is transmitted in a slot may be flexibly determined. It is noted that the S-PRS pattern in the disclosure is not limited to the pattern illustrated in FIG. 8.

First, FIG. 9 illustrates a method considering that a pattern based on UL SRS for positioning is reused in S-PRS. According to FIG. 9(A), the Comb pattern and number of SRS symbols supported in UL SRS for positioning may be reused as S-PRS. Specifically, the S-PRS pattern for Comb-2 and the number of PRS symbols = 1 is illustrated in FIG. 9(B). The S-PRS pattern for Comb-2 and the number of PRS symbols = 2 is illustrated in FIG. 9(C). The S-PRS pattern for Comb-2 and the number of PRS symbols = 4 is illustrated in FIG. 9(D). The S-PRS pattern for Comb-4 and the number of PRS symbols = 2 is illustrated in FIG. 9(E). The S-PRS pattern for Comb-4 and the number of PRS symbols = 4 is illustrated in FIG. 9(F). The S-PRS pattern for Comb-4 and the number of PRS symbols = 8 is illustrated in FIG. 9(G). The S-PRS pattern for Comb-4 and the number of PRS symbols = 12 is illustrated in FIG. 9(H). The S-PRS pattern for Comb-8 and the number of PRS symbols = 4 is illustrated in FIG. 9(I). The S-PRS pattern for Comb-8 and the number of PRS symbols = 8 is illustrated in FIG. 9(J). The S-PRS pattern for Comb-8 and the number of PRS symbols = 12 is illustrated in FIG. 9(K). According to FIG. 9, S-PRS may have various symbol lengths, and the start position and length of the symbol through which S-PRS is transmitted in a slot may be flexibly determined. It is noted that the S-PRS pattern in the disclosure is not limited to the pattern illustrated in FIG. 9.

Additionally, the positioning method that the terminal may support may be defined as UE capability. For example, methods such as sidelink time difference of arrival (SL-TDOA), sidelink angle-of-departure (SL-AOD), sidelink multi-round trip time (SL Multi-RTT), sidelink round trip time (SL RTT), sidelink E-CID and sidelink angle-of-arrival (SL-AOA) may be considered as positioning methods, but are not limited thereto. The supportable SL positioning method is determined by terminal capability, and the corresponding capability information may be transmitted to other terminals and a base station.

Next, in case where the terminal performs positioning through the SL, positioning related configuration information may be (pre-)configured. For example, S-PRS information may be (pre-)configured as positioning related information. Specifically, whether to activate/deactivate S-PRS transmission may be (pre-)configured. In case where S-PRS transmission is disabled, the corresponding terminal may not transmit S-PRS even if it receives an instruction/request to transmit S-PRS through a location server (LS) or another terminal. Additionally, in case where the transmission bandwidth (allocation area on frequency axis) and period (allocation area on time axis) of S-PRS may be configured in various ways, the relevant information may be (pre-)configured. As another example, information about the positioning method may be (pre-)configured as positioning related information. For example, which positioning methods are available may be (pre-)configured. Terminal positioning methods may include SL-TDOA, SL-AOD, SL Multi-RTT, SL RTT, sidelink E-CID, SL-AOA, etc., and the supportable sidelink positioning method is determined by the terminal capability and the corresponding capability information may be transmitted to other terminals and a base station. Additionally, among the sidelink positioning methods that can be supported by terminal capabilities, the available positioning method may be (pre-)configured.

As discussed with reference to Table 1, in case where the terminal does not receive positioning configuration from another terminal or LS, the terminal may comply with positioning configuration information that is pre-configured and then stored therein. For example, in this case, the terminal may be out of the network coverage area. As another example, this may be a case where no positioning related configuration information is received from other terminals. After a certain time point, the terminal may be configured with positioning configuration information from another terminal or LS. In case corresponding to UE (no LS) or LS (through UE) in Table 1 in which positioning information is configured from another terminal, the corresponding information may be transmitted by broadcast, unicast, or group cast through an SL, and the corresponding information may be indicated by SCI (1st stage SCI or 2nd stage SCI) or may be indicated through PC5-RRC or SL MAC-CE. In case corresponding to LS (through UE) in which the LS is connected to the terminal and the terminal itself is configured with positioning information, it may be information indicated by the higher layer of the terminal. On the other hand, in case corresponding to LS (through BS) of Table 1 in which the terminal is configured with positioning configuration information from the LS connected to the base station, the corresponding information may mean that the terminal is configured in a cell-common manner from the base station. Here, cell-common may mean that terminals in a cell receive the same information configuration from a base station. In this case, the terminal may consider a method of receiving a sidelink system information block (SL-SIB) from the base station and obtaining cell-common information. It may also mean a case in which the terminal is configured in a UE-specific manner after an RRC connection with the base station is established.

As described above, in case where the terminal does not receive positioning configuration from another terminal or LS, the terminal may transmit or receive a positioning signal according to positioning configuration information that is pre-configured and is then stored therein. In case where the terminal is configured with positioning information from another terminal or LS after a certain time point, the configured information may be one or more. For example, the S-PRS information may be determined such that only one pattern is configured, and it may be allowed to configure one or more pieces of pattern information. In case where one or more pieces of pattern information is configured, the terminal may transmit the corresponding configuration information to the LS, and the LS may determine an appropriate S-PRS pattern and indicate the determined S-PRS pattern to the terminal. As another example, it may be determined that the information about the positioning method is pre-configured in only one method, and it may be allowed to pre-configure information about one or more positioning methods. Here, the positioning method may include information about whether the method is UE-based or UE-assisted. Alternatively, the information about the positioning method may be information about whether the method is absolute positioning, relative positioning, or ranging. Alternatively, the information about the positioning method may be information about whether the method is SL-TDOA, SL-AOD, SL Multi-RTT, SL E-CID, or SL-AOA. In case where one or more pieces of pattern information is configured, the terminal may transmit the corresponding configuration information to the LS, and the LS may determine an appropriate positioning method and indicate the determined positioning method to the terminal

In case where the terminal performs positioning through an SL, the terminal may transmit a positioning signal through the SL. Here, the positioning signal may be referred to as S-PRS. Methods of transmitting an S-PRS in an SL may be classified into two categories:

* Transmission of S-PRS from a PosRef terminal to a target terminal
* Transmission of S-PRS from a target terminal to a PosRef terminal

Depending on the positioning method used, both of the above two transmission methods may be performed, or only one of the two methods may be performed. For example, in case where SL-TDOA is performed, SL positioning may be performed by transmitting an S-PRS by using the first method. On the other hand, in case where SL Multi-RTT or SL RTT is performed, both of the S-PRS transmission methods may be required. With reference to FIG. 7, the UE-A and UE-B may correspond to the target terminal and PosRef terminal, respectively. However, in FIG. 7, the UE-A and UE-B are not limited to the target terminal and PosRef terminal, respectively. In other words, the UE-A may correspond to the PosRef terminal and the UE-B may correspond to the target terminal. In addition, the S-PRS transmitted from the PosRef terminal to the target terminal and the S-PRS transmitted from the target terminal to the PosRef terminal may be the same type of positioning signal or may be different types of positioning signals.

Additionally, the terminal may perform absolute positioning, relative positioning, or ranging through RTT in the SL. First, as previously explained, the absolute positioning may refer to the two-dimensional (x,y) and three-dimensional (x,y,z) coordinate location information of the terminal by longitude and latitude. The target terminal may require multiple PosRef terminals for the absolute positioning. Additionally, the target terminal may need to receive known location information from multiple PosRef terminals for the absolute positioning. In case where the target terminal performs RTT with multiple PosRef terminals, there may be multiple pairs between the target terminal and one PosRef terminal in FIG. 7. It may also be named Multi-RTT. Next, the relative positioning may mean relative 2-dimensional or 3-dimensional position information from another terminal. Therefore, for relative positioning, the target terminal may require only one PosRef terminal as illustrated in FIG. 7. Additionally, it may need to receive known location information from the corresponding PosRef terminals. In addition, by additionally measuring or receiving direction information, the target terminal may determine relative 2-dimensional or 3-dimensional location information from the PosRef terminal. Lastly, the ranging may mean measuring the distance or direction from another terminal. In case of measuring the distance, only one PosRef terminal may be required as illustrated in FIG. 7. Additionally, there is no need to receive known location information from the corresponding PosRef terminals. In case where the meaning of ranging in the SL includes both distance and direction information, the ranging may have the same meaning as the relative positioning.

<Second Embodiment>

A second embodiment proposes a method for selecting and allocating resources for transmitting an SL positioning signal when transmitting the corresponding signal. The positioning signal may be an S-PRS request signal, an S-PRS signal, or information necessary to perform positioning. However, the disclosure is not limited thereto.

To ensure SL positioning accuracy, the method for transmitting S-PRS needs to be redesigned. Specifically, the resource allocation method for S-PRS transmission needs to be different from the existing resource allocation method for data transmission. In case where S-PRS transmission is performed on the same resource as physical sidelink shared channel (PSSCH), which is an SL data transmission channel (hereinafter referred to as "operation in a shared resource pool"), S-PRS and PSSCH transmission resources are shared, so that collisions and interference with PSSCH resource may occur. This may cause the accuracy of SL positioning to not be guaranteed. Therefore, the disclosure proposes a method in which S-PRS transmission is performed in a dedicated resource that is separate from the resource area in which PSSCH is transmitted. Through the corresponding method, not only can the accuracy of positioning be improved by avoiding resource collisions and interference with PSSCH, but it can also make it possible to allocate the transmission time and frequency domain of S-PRS more flexibly when allocating transmission resources for S-PRS transmission.

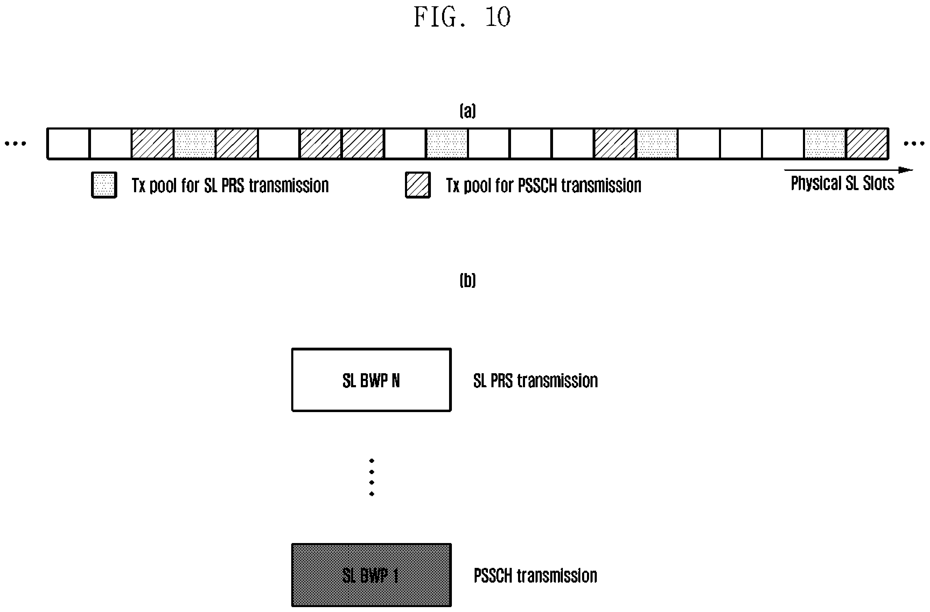

FIG. 10 is a diagram for explaining a method for transmitting S-PRS, which is an SL positioning signal, in a dedicated resource area that is separate from a resource area in which PSSCH is transmitted when transmitting the S-PRS, according to an embodiment of the disclosure. However, the content of the disclosure is not limited to the case of transmitting the S-PRS in a dedicated resource area. For example, the disclosure may be applied even in case where the S-PRS is transmitted on the same resource as the data transmission channel.

With reference to FIG. 10(A), a method for dividing a resource area where PSSCH is transmitted and a resource area where S-PRS is transmitted through TX pool is illustrated. Specifically, according to FIG. 10(A), a transmission resource areas may be distinguished by configuring the TX pool of PSSCH and TX pool of S-PRS to not overlap in a time domain.

Next, with reference to FIG. 10(B), a method for dividing a resource area where PSSCH is transmitted and a resource area where S-PRS is transmitted through sidelink (SL) bandwidth part (BWP) is illustrated. In case where multiple SL BWPs are supported in the SL, a certain SL BWP may be classified into a BWP for PSSCH transmission and another SL BWP that is separated from the BWP and is for S-PRS transmission, through the distinguishment in a frequency domain. However, in order for this method to be supported, the terminal may additionally be required to perform SL BWP switching. It is noted that in the disclosure, the method for transmitting S-PRS in a dedicated resource area that is separate from the resource area in which PSSCH is transmitted is not limited to the method described with reference to FIG. 10.

Through the method proposed in this embodiment, allocation of S-PRS transmission resources may be performed in a dedicated resource area that is separate from PSSCH transmission. Here, resource allocation may include both Mode 1 and Mode 2 methods. As previously explained, Mode 1 is a method in which a base station performs resource allocation and provides resource allocation information to the terminal through DCI. The base station may receive the information necessary for S-PRS transmission resource allocation from the target terminal or LS. The corresponding information may be information related to positioning requirements necessary to perform SL positioning. In Mode 1, the terminal may perform resource allocation using the resource allocation information indicated through the corresponding DCI and indicate the corresponding information to other terminals through the SCI. In contrast, Mode 2 is a method in which the terminal performs resource allocation through direct sensing. After resource allocation, resource reservation information may be indicated to another terminal through the SCI.

In Mode 1, the DCI for S-PRS transmission resource allocation may be a new DCI format that is distinct from the existing DCI format 3_0 (e.g., DCI format 3_1). Additionally, the SCI in which S-PRS transmission resource allocation information is indicated in Mode 2 may be a new SCI format that is distinct from the existing SCI format 1_A (e.g., SCI format 1_B).

Next, when selecting and allocating S-PRS transmission resources, the terminal and base station need to select the following parameters to satisfy the positioning requirements. In the disclosure, it is noted that the parameters considered when selecting and allocating the S-PRS transmission resources are not limited to the parameters presented below.

  * Symbol length that may be allocated to S-PRS within one slot
  * Number of subchannels that may be allocated to S-PRS within one slot
  * S-PRS repetition factor
  * S-PRS latency bound

For the symbol length that may be allocated to S-PRS within one slot, among the above parameters, FIGS. 8 and 9 are referred. FIGS. 8 to 9 illustrate that S-PRS may be designed with symbols of various lengths.

The symbol length that may be allocated to the S-PRS within one slot may be (Pre-)configured. The terminal may determine the number of symbols to allocate the S-PRS within in one slot based on the above parameters.

The symbol length that may be allocated to S-PRS within one slot may be (Pre-)configured to one value or more than one value. In case where the symbol length that may be allocated to the (pre-)configured S-PRS is configured to one or more values, the terminal may determine the length of the S-PRS symbol and indicate the corresponding information to other terminals through SCI. In this case, a new SCI format may be defined. Additionally, the terminal may determine the start position and length of a symbol where the S-PRS is transmitted in a slot according to the resource allocation results of the S-PRS.

The number of subchannels that may be allocated to the S-PRS within one slot may also be (pre-)configured. The terminal may determine the number of subchannels allocated to the S-PRS in a slot according to the S-PRS resource allocation result (Mode 1 or Mode 2).

For example, when the number of subchannels that may be allocated to S-PRS is (pre-)configured to X, $Y \leq X$ subchannels may be allocated to S-PRS transmission through resource allocation. Alternatively, the S-PRS transmission may be determined by the number of subchannels that may be allocated to the (pre-)configurated S-PRS. In this case, the S-PRS resource allocation on a frequency axis may be interpreted as being fixed to the number of subchannels that may be allocated to the (pre-)configured S-PRS. For example, in case where the number of subchannels that may be allocated to the (pre-)configured S-PRS is X subchannels, the S-PRS may be transmitted in X subchannels.

As another example, the number of subchannels that may be allocated to the S-PRS within one slot may be determined by the entire sidelink (SL) bandwidth part (BWP) area. In this case, the terminal may determine the number of subchannels allocated to the S-PRS in a slot according to the S-PRS resource allocation result (Mode 1 or Mode 2). For example, in case where the number of subchannels in SL BWP is X, $Y \leq X$ subchannels may be allocated to S-PRS transmission through resource allocation. In contrast, for S-PRS transmission, the number of subchannels of SL BWP may be determined by the number of subchannels that may be allocated to the S-PRS. For example, in case where the number of subchannels in SL BWP is X subchannels, the S-PRS may be transmitted in X subchannels.

S-PRS repetition factor may be (pre-)configured. The terminal may determine whether to transmit (intra-slot) S-PRS repeatedly over a number of slots (inter-slot) or within a slot (intra-slot) based on the S-PRS repetition factor.

For example, the S-PRS may be transmitted repeatedly in one or more slots (inter-slot), and the number of slots (or repeatable factor) for repeating S-PRS transmission may be (pre-)configured. Alternatively, the S-PRS may be repeated and transmitted in a plurality of symbols within one slot (intra-slot), and the number of symbols to repeat S-PRS transmission (or repeatable factor) may be (pre-)configured.

In this case, the (pre-)configured S-PRS repetition factor may be configured to one value or more than one value. Depending on the configuration value, S-PRS repetition may not be possible. In case where the (pre-)configured S-PRS repetition factor is configured to one or more values, the terminal may determine the S-PRS repetition factor and indicate the corresponding information to other terminals through SCI. In this case, a new SCI format may be defined. Additionally, the terminal may determine the S-PRS repetition factor according to the S-PRS resource allocation results.

The S-PRS repetition factor may be applied in consecutive logical slots of an SL. Alternatively, the S-PRS repetition factor may be applied to consecutive logical symbols within a slot. As another example, the S-PRS repetition factor may also be applied to non-consecutive logical slots of an SL. Alternatively, the S-PRS repetition factor may be applied to non-consecutive logical symbols of an SL. As another example, the S-PRS repetition factor may be limited and applied only to physically consecutive slots. Alternatively, the S-PRS repetition factor may be physically applied only to consecutive symbols within a slot.

In general, the longer the symbol length that may be allocated to S-PRS within one slot, the larger the number of subchannels that may be allocated to S-PRS within one slot, and the larger the S-PRS repetition factor, the area on the time and frequency axis where the S-PRS is transmitted increases. Accordingly, the positioning accuracy can be improved. Therefore, when selecting and allocating S-PRS transmission resources, the terminal and base station may determine the allocated S-PRS symbol length, the number of allocated S-PRS subchannels, and PRS repetition factor to satisfy positioning requirements.

A value related to S-PRS latency bound may be (pre-)configured. The terminal may determine the latency of S-PRS based on the S-PRS latency bound.

The S-PRS latency bound may be considered as a requirement for S-PRS transmission. Specifically, when allocating transmission resources for S-PRS, if the transmission time of the corresponding resources is delayed, a delay may occur in performing positioning. In particular, in case where positioning is performed using round trip time (RTT), if the S-PRS transmission time is delayed, a delay may occur in performing positioning. Therefore, it needs to satisfy this when selecting and allocating S-PRS transmission resources. In particular, a value related to the latency bound for performing positioning using RTT may be (pre-)configured.

When multiple TX resource pools for S-PRS transmission are configured for the terminal, and in case where the terminal must select one TX resource pool for S-PRS transmission, the terminal may select the TX resource pool for S-PRS transmission based on the configuration information related to the parameters below that are (pre-)configured in the TX resource pool.

    * Symbol length that may be allocated to S-PRS within one slot
    * Number of subchannels that may be allocated to S-PRS within one slot
    * S-PRS repetition factor
    * S-PRS latency bound

Specifically, the terminal may select a TX resource pool that may satisfy positioning accuracy. For example, when TX resource pools A and B are configured, in case of TX resource pool A, the symbol length that may be allocated to the (pre-)configured S-PRS is short. In case of TX resource pool B, in case where the symbol length that may be allocated to the (pre-)configured S-PRS is long and the terminal has high requirements for positioning accuracy, TX resource pool B may be selected.

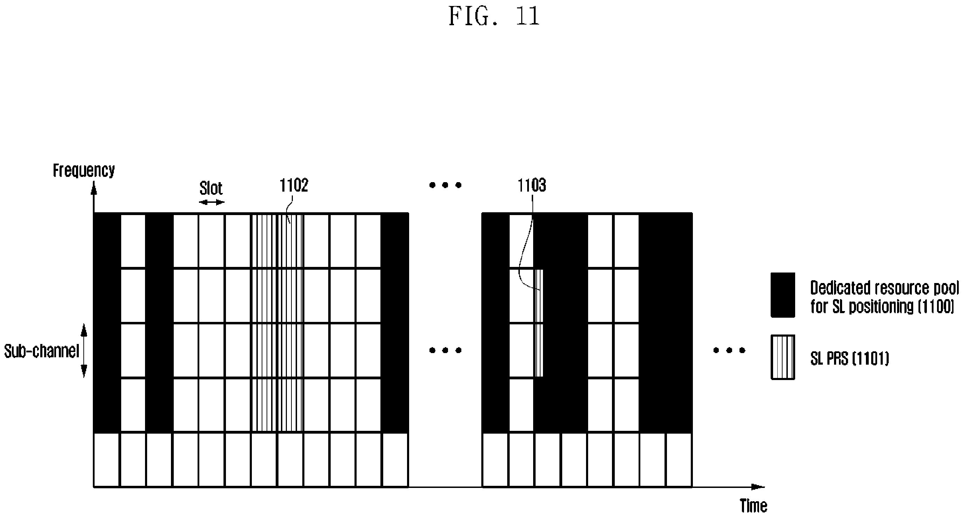

FIG. 11 is a diagram for explaining the above-mentioned parameters when selecting and allocating transmission resources for S-PRS, which is an SL positioning signal, according to an embodiment of the disclosure. With reference to FIG. 11, 1100 denotes a resource pool area dedicated for performing SL positioning, that is, for S-PRS transmission. As described above, the corresponding area may be a separate area from a resource pool area where PSSCH is transmitted.

Next, 1101 denotes a resource area allocated for S-PRS transmission within the area 1100, and different examples are shown at 1102 and 1103. In the following, a case where a repetition factor is repeatedly transmitted over several slots (inter-slot) is illustrated, but the embodiment of the disclosure is not limited thereto. The repetition factor may refer to the number of repeated transmissions within a slot (intra-slot).

Specifically, 1102 illustrates a case where S-PRS is allocated to all symbols within one slot, S-PRS repetition factor=2 (repetition in two slots), and 4 subchannels in a frequency axis are allocated to the S-PRS transmission area.

In contrast, 1103 illustrates a case where S-PRS is allocated to some symbols within one slot, a case where S-PRS repetition factor = 1 (not repetition), and a case where two subchannels in a frequency axis are allocated to the S-PRS transmission area. Compared to 1103, 1102 is a case where more resources are allocated for S-PRS transmission, and may be more advantageous in improving positioning accuracy.

<Third Embodiment>

A third embodiment proposes a physical layer structure for transmitting an SL positioning signal when transmitting the corresponding signal. Specifically, when S-PRS is transmitted, the corresponding physical layer structure may be different from the existing one. Additionally, in the second embodiment, it has been explained that the way the S-PRS is mapped to the resource area on the time and frequency axis may vary depending on resource allocation for S-PRS transmission. This embodiment describes a method for mapping S-PRS according to resource allocation for S-PRS transmission, together with the physical layer structure for transmitting S-PRS.

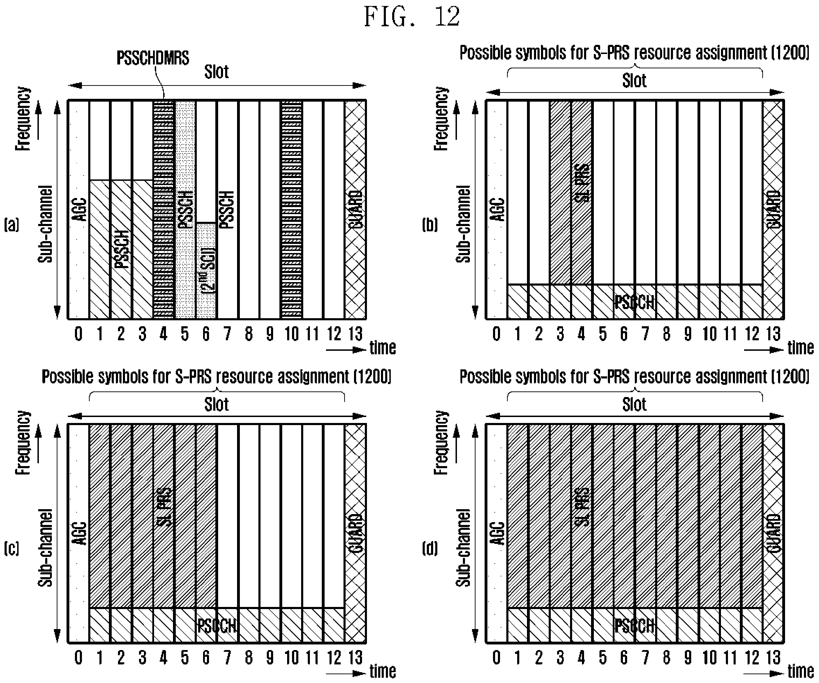

FIG. 12 is a diagram for explaining a structure of a physical layer for transmitting an SL positioning signal when transmitting the corresponding signal according to an embodiment of the disclosure. With reference to FIG. 12(A), an example of an SL physical layer structure for PSSCH transmission is illustrated.

Specifically, as illustrated in FIG. 12(A), a first symbol is used as automatic gain control (AGC) and a last symbol is used as a guard symbol. Additionally, as illustrated in FIG. 12(A), PSCCH (1st SCI transmission) and PSSCH (data transmission) are multiplexed and transmitted. Additionally, the 2nd SCI is mapped and transmitted starting from the symbol where the first PSSCH DMRS is transmitted in the PSSCH area. However, in case of considering transmission of S-PRS in a resource area where PSSCH is not transmitted, as proposed in the second embodiment, there is no need to use the physical layer structure as illustrated in FIG. 12(A). Specifically, the PSSCH area is no longer needed, and 2nd SCI transmission may also not be needed.

In addition, as described with reference to FIGS. 8 and 9, in case where various S-PRS symbol lengths are considered and the start position and length of the symbol at which the S-PRS is transmitted in a slot are determined according to the resource allocation of the S-PRS, as illustrated in FIGS. 12(B) to 12(D), it may be more advantageous for the transmission areas for PSCCH (1st SCI transmission) and S-PRS to be frequency-division multiplexed. This is because, when the PSCCH is transmitted as illustrated in FIG. 12(A), the frequency area in which the S-PRS is allocated may differ between a symbol area were the PSCCH is transmitted and a symbol area where the PSCCH is not transmitted.

Specifically, FIGS. 12(B) to 12(D) illustrate a physical layer structure in which the transmission areas for PSCCH (1st SCI transmission) and S-PRS are frequency-division multiplexed. In this case, the frequency area allocated to PSSCH may be located at the bottom of the area where S-PRS is transmitted and may occupy a fixed frequency area of the X resource block (RB). In this case, X=2 RB may be considered. According to FIG. 12(B), a case where S-PRS selects and allocates only two symbols with symbol index = 3 and 4 in a symbol area 1200 where the S-PRS may be transmitted is illustrated. According to FIG. 12(C), a case where 6 symbols with symbol index = 1 to 6 are selected and allocated in the symbol area 1200 where the S-PRS may be transmitted is illustrated. According to FIG. 12(D), a case where 12 symbols with symbol index = 1 to 12 are selected and allocated in the symbol area 1200 where the S-PRS may be transmitted is illustrated.

<Fourth Embodiment>

A fourth embodiment proposes a procedure for performing positioning using round trip time (RTT) in an SL. Through the proposed procedure, information necessary to perform RTT is exchanged between SL terminals, and positioning may be performed through this.

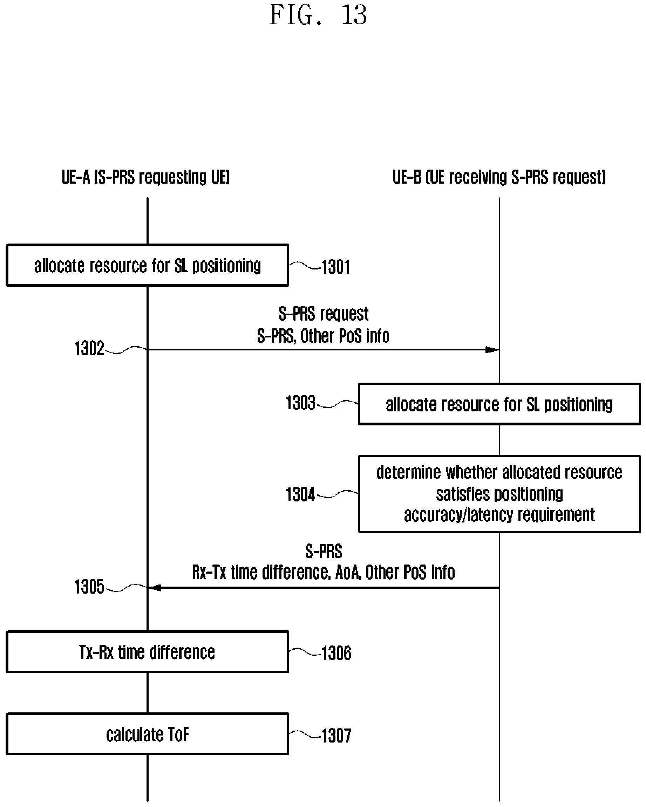

FIG. 13 is a diagram for explaining a positioning procedure between terminals in case where a single sided RTT method is considered in an SL according to an embodiment of the disclosure. With reference to FIG. 13, UE-A and UE-B are illustrated. The UE-A and UE-B may correspond to the target terminal and PosRef terminal, respectively. Here, the target terminal may correspond to a terminal that wants to measure its own location, and a terminal that may provide a positioning signal and its own location information to measure the location of the target terminal may be named a PosRef terminal.

With reference to FIG. 13, the UE-A may transmit an S-PRS request signal to the UE-B to perform RTT, and the UE-B may receive the S-PRS request signal from the UE-A and perform S-PRS transmission. In the disclosure, a method for selecting and allocating resources as in operation 1301 or 1303 may be used to transmit an S-PRS request signal, transmit S-PRS, or transmit information necessary to perform positioning. Here, resource allocation may include both Mode 1 and Mode 2 schemes. In this case, for a detailed method of allocating resources to transmit the S-PRS request signal, transmit S-PRS, or transmit information necessary to perform positioning (e.g., RTT related information), a reference is made to the second embodiment.

In this case, when selecting and allocating resources in operation 1301, the terminal (in case of Mode 2) and base station (in case of Mode 1, in case where the UE-A is within a base station coverage) need to allocate the corresponding resources to satisfy the positioning requirements.

In operation 1302, the S-PRS request signal, S-PRS, and other positioning related information (e.g., information required to perform RTT, S-PRS resource allocation information, etc.) may be transmitted to the UE-B. A reference is made to the third embodiment for the physical layer structure for transmitting these. Specifically, the S-PRS request signal or other positioning related information may be transmitted through PSCCH (SCI). In this case, SCI may be a new SCI format that is distinct from the existing SCI format 1_A (e.g., SCI format 1_B). For details on this, a reference is made to a sixth embodiment.

With reference to FIG. 13, when selecting and allocating resources in operation 1303, the terminal (in case of mode 2) and base station (in case of Mode 1, in case where the UE-B is within a base station coverage) need to allocate the corresponding resources to satisfy the positioning requirements. In this case, the positioning requirement may be included in the positioning related information indicated in operation 1302, and the UE-B may indirectly determine the positioning requirement based on the time at which the S-PRS has been transmitted in operation 1302 (symbol length allocated to S-PRS within one slot, S-PRS repetition factor) and frequency resource allocation information (number of subchannels allocated to S-PRS within one slot). In this case, resource allocation may be performed identically to the time at which S-PRS is transmitted and frequency resource allocation information in operation 1302. Also, the UE-B needs to select resources in operation 1303 to satisfy the S-PRS latency bound for the S-PRS request requested in operation 1302. However, in case where the selected resource in operation 1303 does not satisfy the positioning requirements (accuracy and latency), or in case where there are no resources that satisfy the positioning requirements (accuracy and latency) in operation 1303, the UE-B identifies this in operation 1304. Also, if the positioning requirements are not satisfied, a response may not be made in response to the S-PRS request received in operation 1302. In other words, operation 1305 may not be performed.

In operation 1305, the UE-B may send S-PRS and other positioning related information (e.g., Rx-Tx time difference ($T_{reply}$ information, see Equation 1), direction information (AoA information), S-PRS resource allocation information, etc.) to the UE-A.

The UE-A may measure the Tx-Rx time difference ($T_{round}$ information, see Equation 1) as in operation 1306 and calculate ToF (see Equation 1) in operation 1307. Through the ToF calculation, the terminal may perform absolute positioning, relative positioning, or ranging. For details, a reference is made to the first embodiment.

According to FIG. 13, the operation in which the UE-B allocates resources for S-PRS transmission (1303) according to the S-PRS request of the UE-A (1302) and identifies its validity (1304) has been described. However, the disclosure is not limited to the terminal operation illustrated in FIG. 13. Specifically, operations 1303 and 1304 may not be performed in FIG. 13. In FIG. 13, instead of not performing operations 1303 and 1304, a method in which the UE-A implicitly or explicitly indicates the resource on which the UE-B will perform S-PRS transmission may be considered.

First, in a method that implicitly indicates, the resources for S-PRS transmission of the UE-B may be determined based on the resources allocated for S-PRS transmission of the UE-A through Mode 1 or Mode 2 in operation 1301.

Specifically, when requesting S-PRS in operation 1302, the UE-A may transmit together with information about resources allocated for S-PRS transmission of the UE-A to the UE-B through PSCCH (SCI). When the UE-B receives an S-PRS request and receives the corresponding resource allocation information, a method in which the resources through which the UE-B transmits S-PRS are determined based on the time (X slot) when the S-PRS request is received from the UE-A, or based on the timing (X slot) of the S-PRS resource allocation information transmitted by the UE-A may be considered.

Specifically, the resource for the UE-B to perform S-PRS transmission may be an X+Y slot. Here, Y may be determined in units of slots or physical time (e.g., ms). In case where Y is determined as a unit of slot, it may have different values depending on numerology. In contrast, in case where Y is determined to be a unit of physical time, it may be converted to a unit of slots by considering numerology.

Here, the value of Y may be determined to a single fixed value or may have more than one value. Additionally, the value of Y may be (pre-)configured. In case where the value of Y may have more than one value, the value of Y may be (pre-)configured to one of the one or more values. Additionally, in case where the value of Y may have one or more values, one or more values are (pre-)configured, and the S-PRS request signal may include information indicating one of the one or more values.

Next, in a method in which explicitly indicates, not only the S-PRS transmission resources of the UE-A may be determined, but also the S-PRS transmission resources of the UE-B may be determined, through Mode 1 or Mode 2 in operation 1301. Specifically, when requesting S-PRS in operation 1302, the UE-A may transmit information about resources allocated for S-PRS transmission of the UE-A together with information about resources allocated for S-PRS transmission of the UE-B to the UE-B through PSCCH (SCI). The UE-B may receive the corresponding information and transmit S-PRS on the resource indicated through PSCCH (SCI).

<Fifth Embodiment>

A fifth embodiment proposes a procedure for performing positioning using round trip time (RTT) in an SL. Through the proposed procedure, information necessary to perform RTT is exchanged between SL terminals, and positioning may be performed through this.

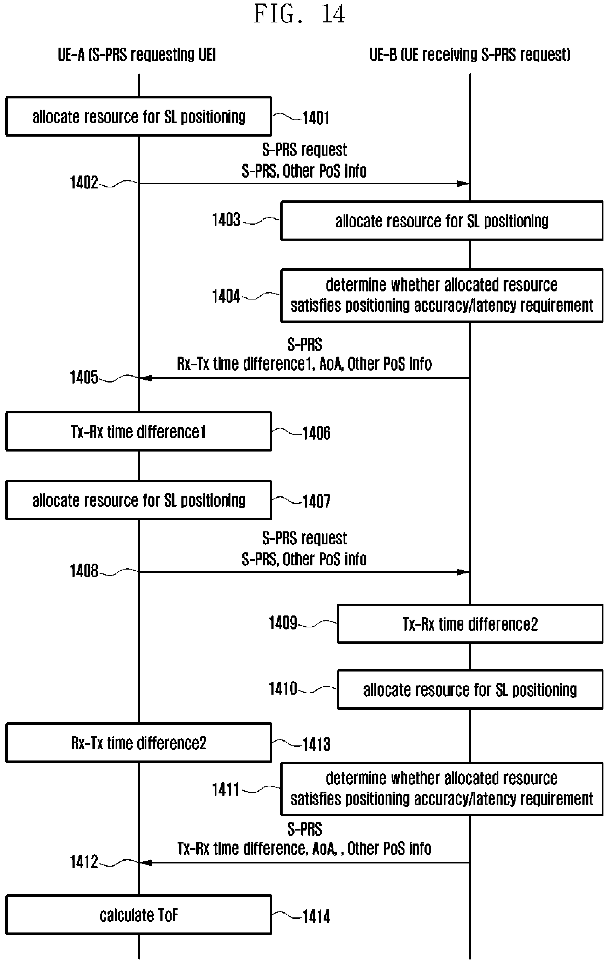

FIG. 14 is a diagram for explaining a positioning procedure between terminals in case where a double sided RTT method is considered in an SL according to an embodiment of the disclosure. With reference to FIG. 14, UE-A and UE-B are illustrated. The UE-A and UE-B may correspond to the target terminal and PosRef terminal, respectively. Here, the target terminal may correspond to a terminal that wants to measure its own location, and a terminal that may provide a positioning signal and its own location information to measure the location of the target terminal may be named a PosRef terminal.

With reference to FIG. 14, the UE-A may transmit an S-PRS request signal to the UE-B to perform RTT, and the UE-B may receive the S-PRS request signal from the UE-A and perform S-PRS transmission. In the disclosure, a method for selecting and allocating resources as in operation 1401, 1403, 1407, or 1410 in order to transmit the S-PRS request signal, transmit S-PRS, or transmit information necessary to perform positioning may be used. Here, resource allocation may include both Mode 1 and Mode 2 schemes. In this case, for a detailed method of allocating resources to transmit an S-PRS request signal, transmit S-PRS, or transmit information necessary to perform positioning (e.g., RTT related information), a reference is made to the second embodiment.

In this case, when selecting and allocating resources in operation 1401, the terminal (in case of Mode 2) and base station (in case of Mode 1, in case where the UE-A is within a base station coverage) need to allocate the corresponding resources to satisfy the positioning requirements.

In operation 1402, the S-PRS request signal, S-PRS, and other positioning related information (e.g., information required to perform RTT, S-PRS resource allocation information, etc.) may be transmitted to the UE-B. A reference is made to the third embodiment for the physical layer structure for transmitting these. Specifically, the S-PRS request signal or other positioning related information may be transmitted through PSCCH (SCI). In this case, SCI may be a new SCI format that is distinct from the existing SCI format 1_A (e.g., SCI format 1_B). For details on this, a reference is made to a sixth embodiment.

With reference to FIG. 14, when selecting and allocating resources in operation 1403, the terminal (in case of mode 2) and base station (in case of Mode 1, in case where the UE-B is within a base station coverage) need to allocate the corresponding resources to satisfy the positioning requirements. In this case, the positioning requirement may be included in the positioning related information indicated in operation 1402, and the UE-B may indirectly determine the positioning requirement based on the time at which the S-PRS has been transmitted in operation 1402 (symbol length allocated to S-PRS within one slot, S-PRS repetition factor) and frequency resource allocation information (number of subchannels allocated to S-PRS within one slot). In this case, resource allocation may be performed identically to the time and frequency resource allocation information transmitted by the S-PRS in operation 1402. Also, the UE-B needs to select resources in operation 1403 to satisfy the S-PRS latency bound for the S-PRS request in operation 1402.

However, in case where the resource selected in operation 1403 does not satisfy the positioning requirements (accuracy and latency), or in case where there are no resources that satisfy the positioning requirements (accuracy and latency) in operation 1403, the UE-B identifies this in operation 1404. In case where the positioning requirements are not satisfied, the S-PRS request may not be responded to in operation 1402. In other words, operation 1405 may not be performed. In case where operation 1405 is not performed, all subsequent operations may not be performed. In operation 1405, the UE-B may send S-PRS and other positioning related information (e.g., Rx-Tx time difference ($T_{reply1}$ information, see Equation 2), direction information (AoA information), S-PRS resource allocation information, etc.) to the UE-A.

In operation 1406, the UE-A may measure the Tx-Rx time difference ($T_{round1}$ information, see Equation 2).

Next, for double sided RTT in operation 1407, the UE-A may select and allocate resources in operation 1407 for an additional S-PRS request. In this case, the terminal (in case of Mode 2) and base station (in case of Mode 1, in case where the UE-A is within a base station coverage) need to allocate the corresponding resources to satisfy the positioning requirements.

Next, in operation 1408, an S-PRS request signal, S-PRS, and other positioning related information (e.g., information required to perform RTT, S-PRS resource allocation information, etc.) are sent to the UE-B. A reference is made to the third embodiment for the physical layer structure for transmitting these. Specifically, the S-PRS request signal or other positioning related information may be transmitted through PSCCH (SCI). In this case, SCI may be a new SCI format that is distinct from the existing SCI format 1_A (e.g., SCI format 1_B). For details on this, a reference is made to a sixth embodiment. Next, with reference to FIG. 14, the UE-B may measure the Tx-Rx time difference ($T_{round2}$ information, see Equation 2) in operation 1409.

Next, when selecting and allocating resources in operation 1410, the terminal (in case of Mode 2) and base station (in case of Mode 1, in case where the UE-B is within a base station coverage) need to allocate the corresponding resources to satisfy the positioning requirements. In this case, the positioning requirement may be included in the positioning related information indicated in operation 1408, and the UE-B may indirectly determine the positioning requirement based on the time at which the S-PRS has been transmitted in operation 1408 (symbol length allocated to S-PRS within one slot, S-PRS repetition factor) and frequency resource allocation information (number of subchannels allocated to S-PRS within one slot). In this case, resource allocation may be performed identically to the time at which S-PRS is transmitted and frequency resource allocation information in operation 1408. Also, the UE-B needs to select resources in operation 1410 to satisfy the S-PRS latency bound for the S-PRS request in operation 1408.. However, in case where the selected resource in operation 1410 does not satisfy the positioning requirements (accuracy and latency), or in case where there are no resources that satisfy the positioning requirements (accuracy and latency) in operation 1410, the UE-B identifies this in operation 1411. If the positioning requirements are not satisfied, a response may not be made in response to the S-PRS request in operation 1408. In other words, operation 1412 may not be performed. In case where operation 1412 is not performed, all subsequent operations may not be performed.

In case where the UE-A only obtains RTT measurement results up to operation 1406 due to no response to the S-PRS request in operation 1411, a single sided RTT is performed without performing double sided RRT, so ToF (see Equation 1) may be calculated in operation 1414.

Otherwise, in operation 1412, the UE-B may transmit S-PRS and other positioning related information (e.g., Tx-Rx time difference ($T_{round2}$ information, see Equation 2), direction information (AoA information), S-PRS resource allocation information, etc.) to the UE-A.

In operation 1413, the UE-A may measure the Rx-Tx time difference ($T_{reply2}$ information, see Equation 2).

In operation 1414, the UE-A may calculate ToF (see Equation 2). Through the ToF calculation, the terminal may perform absolute positioning, relative positioning, or ranging. For details, a reference is made to the first embodiment.

Whether the terminal may perform single sided RTT or double sided RTT is determined by terminal capability, and the corresponding capability information may be transmitted to other terminals and base station. Additionally, whether the terminal may perform single sided RTT or double sided RTT may be (pre-)configured.

According to FIG. 14, an operation in which the UE-B performs resource allocation (1403 or 1410) for S-PRS transmission and validation (1404 or 1411) for S-PRS transmission in response to the S-PRS request of the UE-A (1402 or 1408) has been explained. However, the disclosure is not limited to the terminal operation illustrated in FIG. 14. Specifically, operations (1403 or 1410) and (1404 or 1411) may not be performed in FIG. 14. In FIG. 14, instead of not performing operations 1403 or 1410 and 1404 or 1411, a method in which the UE-A implicitly or explicitly indicates the resource on which the UE-B will perform S-PRS transmission may be considered.

First, in a method that implicitly indicates, the resources for S-PRS transmission of the UE-B may be determined based on the resources allocated for S-PRS transmission of the UE-A through Mode 1 or Mode 2 in operation 1401 or 1407.

Specifically, when requesting S-PRS in operation 1402 or 1408, the UE-A may transmit together with information about resources allocated for S-PRS transmission of the UE-A to the UE-B through PSCCH (SCI). When the UE-B receives an S-PRS request and receives the corresponding resource allocation information, a method in which the resources through which the UE-B transmits S-PRS are determined based on the time (X slot) when the S-PRS request is received from the UE-A, or based on the timing (X slot) of the S-PRS resource allocation information transmitted by the UE-A may be considered.

Specifically, the resource for the UE-B to perform S-PRS transmission may be an X+Y slot. Here, Y may be determined in units of slots or physical time (e.g., ms). In case where Y is determined as a unit of slot, it may have different values depending on numerology. In contrast, in case where Y is determined to be a unit of physical time, it may be converted to a unit of slots by considering numerology. Here, the value of Y may be determined to a single fixed value or may have more than one value. Additionally, the value of Y may be (pre-)configured. In case where the value of Y may have more than one value, the value of Y may be (pre-)configured to one of the one or more values. Additionally, in case where the value of Y may have one or more values, one or more values are (pre-)configured, and the S-PRS request signal may include information indicating one of the one or more values.

Next, in a method in which explicitly indicates, not only the S-PRS transmission resources of the UE-A may be determined, but also the S-PRS transmission resources of the UE-B may be determined, through Mode 1 or Mode 2 in operation 1401 or 1407.

Specifically, when requesting S-PRS in operation 1402 or 1408, the UE-A may transmit information about resources allocated for S-PRS transmission of the UE-A together with information about resources allocated for S-PRS transmission of the UE-B to the UE-B through PSCCH (SCI). The UE-B may receive the corresponding information and transmit S-PRS on the resource indicated through PSCCH (SCI).

<Sixth Embodiment>

A sixth embodiment proposes information that may be included in case where positioning related resource allocation information and related information are indicated through DCI or SCI in an SL by the method proposed in the above embodiment.

In the following, the positioning related resource allocation information and the method for indicating the related information will be explained using DCI or SCI as a specific example. However, this is only to aid understanding of the disclosure and the embodiments of the disclosure are not limited thereto. Specifically, the information presented below may be transmitted as a higher signal to MAC-CE, RRC (including PC5-RRC), or positioning protocol.

DCI is information indicated by the base station to the TX terminal and may be a new DCI format that includes positioning information and is distinguished from the existing DCI format 3_0 (e.g., DCI format 3_1). In addition, SCI may be a new SCI format that includes information indicating positioning related resource allocation and related information from a terminal to other terminals, and is distinguished from the existing SCI format 1_A. Specifically, the following information may be included in SCI and DCI, respectively.

Information included in SCI for positioning (new 1st SCI format)

    * S-PRS request information
    * S-PRS resource allocation information
    * Positioning requirement information
    * RTT related information

       ** Rx-Tx time difference, Tx-Rx time difference

    * Location and direction information of PosRef terminal

Information included in DCI for positioning (new DCI format)

    * S-PRS resource allocation information

It is noted that in this embodiment, in case where positioning related resource allocation information and related information are indicated through DCI or SCI, it is not limited to the information presented above.

For example, in Table 2 below, the fields included in the existing SCI format 1-A may be added to a new 1st SCI format along with the information included in the SCI for positioning. In addition, the fields included in SCI format 2-A and SCI format 2-B defined in Table 3 and Table 4 may be added to a new 1st SCI format along with the information included in SCI for positioning. Table 2 below shows the fields included in the existing SCI format 1-A.

[Table 2]

| Field | Bits |
|---|---|
| Priority | 3 |
| Frequency resource assignment | $\left\lceil \log_2\left(\dfrac{N^{SL}_{subChannel}(N^{SL}_{subChannel}+1)}{2}\right)\right\rceil$ if $N_{MAX}=2$ <br><br> $\left\lceil \log_2\left(\dfrac{N^{SL}_{subChannel}(N^{SL}_{subChannel}+1)(2N^{SL}_{subChannel}+1)}{6}\right)\right\rceil$ if $N_{MAX}=3$ |
| Time resource assignment | 5 if $N_{MAX}=2$ and 9 if $N_{MAX}=3$ |
| Resource reservation period | $\left\lceil \log_2 N_{rsv\_period} \right\rceil$ |
| DMRS pattern | $\left\lceil \log_2 N_{pattern} \right\rceil$ |
| 2nd stage SCI format | 2 |
| Betta offset indicator | 2 |
| Number of DMRS port | 1 |
| MCS | 5 |
| Additional MCS table indicator | 0 ~ 2 depending on additional MCS table configuration |
| PSFCH overhead indication | 0 or 1 depending on PSFCH period |
| Reserved | 2~4 by high layer parameter *sl-NumReservedBits* |

Next, additional control information required for PSSCH decoding may be indicated through the 2nd SCI. First, there is a 2nd SCI format defined as SCI format 2-A, and the fields included in it are shown in Table 3 below.

[Table 3]

| Field | Bits |
|---|---|
| HARQ process ID | 4 |
| New data indicator | 1 |
| Redundancy version | 2 |
| Source ID | 8 |
| Destination ID | 16 |
| HARQ feedback enable/disable indicator | 1 |
| Cast type indicator | 2 |
| CSI request | 1 |

Next, there is a 2nd SCI format defined as SCI format 2-B, and the fields included in it are shown in Table 4 below. Unlike SCI format 2-A in Table 2, SCI format 2-B in Table 4 is a format applied when NACK only feedback is used in a group cast environment. The terminal that has received SCI format 2-B using the Zone ID field included in Table 4 measures a distance to a transmitting terminal and may not provide HARQ feedback if the distance exceeds a value corresponding to the Communication range requirement field included in Table 4.

[Table 4]

| Field | Bits |
|---|---|
| HARQ process ID | 4 |
| New data indicator | 1 |
| Redundancy version | 2 |
| Source ID | 8 |
| Destination ID | 16 |
| HARQ feedback enable/disable indicator | 1 |
| Zone ID | 12 |
| Communication range requirement | 4 |

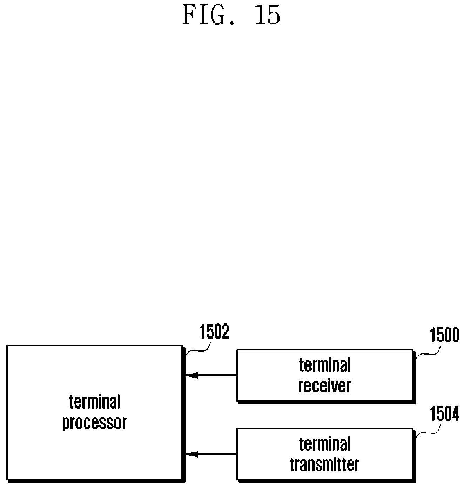

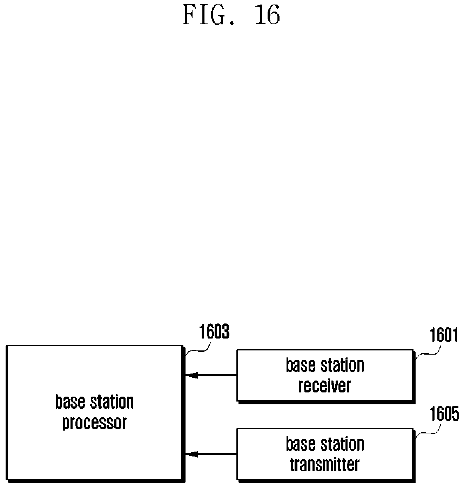

The transmitters, receivers, and processors of a terminal and base station for performing the above embodiments of the disclosure are illustrated in FIGS. 15 and 16 , respectively. The method, performed by the terminal, of performing positioning in an SL is described in the above embodiments, and in order to perform the method, the receivers, processors, and transmitters of the base station and terminal need to operate according to the embodiments.

Specifically, FIG. 15 is a block diagram illustrating an internal structure of a terminal according to an embodiment of the disclosure. As illustrated in FIG. 15 , the terminal of the disclosure may include a terminal receiver 1500, a terminal transmitter 1504, and a terminal processor 1502. The terminal receiver 1500 and terminal transmitter 1504 may be collectively referred to as a transceiver. The transceiver may transmit and receive signals to and from a base station. The signal may include control information and data. To this end, the transceiver may include an RF transmitter for up-converting and amplifying a frequency of a signal being transmitted, an RF receiver for low-noise-amplifying a received signal and down-converting a frequency of the received signal, and the like. Also, the transceiver may receive a signal through a radio channel, output the signal to the terminal processor 1502, and transmit a signal output from the terminal processor 1502 through a radio channel. The terminal processor 1502 may control a series of operations to allow the terminal to operate according to the above-described embodiments of the disclosure.

FIG. 16 is a block diagram illustrating an internal structure of a base station according to an embodiment of the disclosure. As illustrated in FIG. 16 , the base station of the disclosure may include a base station receiver 1601, a base station transmitter 1605, and a base station processor 1603. In the embodiment of the disclosure, the base station receiver 1601 and the base station transmitter 1605 may be collectively referred to as a transceiver. The transceiver may transmit and receive signals to and from a terminal. The signal may include control information and data. To this end, the transceiver may include an RF transmitter for up-converting and amplifying a frequency of a signal being transmitted, an RF receiver for low-noise-amplifying a received signal and down-converting a frequency of the received signal, and the like. Also, the transceiver may receive a signal through a radio channel, output the signal to the base station processor 1603, and transmit a signal output from the base station processor 1603 through a radio channel. The base station processor 1603 may control a series of operations to allow the base station to operate according to the above-described embodiments of the disclosure.

Meanwhile, the embodiments of the invention disclosed in the specification and drawings are merely provided as specific examples to easily explain the technical content of the disclosure and to facilitate understanding of the disclosure, and are not intended to limit the scope of the disclosure. In other words, it is obvious to those skilled in the art that other modifications based on the technical idea of the disclosure can be implemented. Further, the respective embodiments may be combined and operated as needed. For example, parts of all embodiments of the disclosure may be combined with each other to operate the base station and terminal.

**Claims**

1. A method by which a first terminal performs positioning through a sidelink in a wireless communication system, comprising:

    allocating a resource for transmitting a first sidelink positioning signal;
    transmitting the first sidelink positioning signal based on the allocated resource;
    receiving, from at least one second terminal, a second sidelink positioning signal including a transmission/reception signal time difference of the at least one second terminal;

measuring a transmission/reception signal time difference of the first terminal based on the second sidelink positioning signal; and

measuring terminal positioning based on the transmission/reception signal time difference of the first terminal and the transmission/reception signal time difference of the second terminal,

wherein the first sidelink positioning signal includes a first sidelink positioning reference signal (S-PRS), and the second sidelink positioning signal includes a second S-PRS.

2. The method of claim 1, further comprising obtaining configuration information for transmitting a first sidelink positioning signal,

wherein the configuration information includes time information allocable to at least one the first S-PRS, frequency information allocable to the first S-PRS, information about a number of repetitive transmissions of the first S-PRS, and delay transmission information of the first S-PRS.

3. The method of claim 2, wherein resource allocation for transmitting the first S-PRS is determined based on the frequency information allocable to the first S-PRS,

a frequency area in which the first S-PRS is transmitted is smaller than or equal to a preconfigured frequency area.

4. The method of claim 1, wherein the first sidelink positioning signal includes at least one second S-PRS request signal or positioning related information.

5. The method of claim 4, wherein the at least one second S-PRS request signal or positioning related information is transmitted through sidelink control information (SCI),

the sidelink control information is transmitted through physical sidelink control channel (PSCCH).

6. A method by which a second terminal performs positioning through a sidelink in a wireless communication system, comprising:

receiving a first sidelink positioning signal;

measuring a transmission/reception signal time difference of a second terminal based on the first sidelink positioning signal;

allocating a resource for transmitting a second sidelink positioning signal; and

transmitting the second sidelink positioning signal including the transmission/reception signal time difference of the second terminal based on the allocated resource,

wherein the first sidelink positioning signal includes a first sidelink positioning reference signal (S-PRS), and the second sidelink positioning signal includes a second S-PRS.

7. The method of claim 6, further comprising obtaining configuration information for transmitting a second sidelink positioning signal,

wherein the configuration information includes time information allocable to at least one the second S-PRS, frequency information allocable to the second S-PRS, information about a number of repetitive transmissions of the second S-PRS, and delay transmission information of the second S-PRS.

8. The method of claim 7, wherein resource allocation for transmitting the second S-PRS is determined based on the frequency information allocable to the second S-PRS,

a frequency area in which the second S-PRS is transmitted is smaller than or equal to a preconfigured frequency area.

9. A first terminal that performs positioning through a sidelink in a wireless communication system, comprising:

a transceiver that transmit and receive at least one signal; and

a controller,

wherein the controller controls to allocate a resource for transmitting a first sidelink positioning signal, transmit the first sidelink positioning signal based on the allocated resource, receive, from at least one second terminal, a second sidelink positioning signal including a transmission/reception signal time difference of the at least one second terminal, measure a transmission/reception signal time difference of the first terminal based on the second sidelink positioning signal, and measure terminal positioning based on the transmission/reception signal time difference of the first terminal and the transmission/reception signal time difference of the second terminal,

wherein the first sidelink positioning signal includes a first sidelink positioning reference signal (S-PRS), and the second sidelink positioning signal includes a second S-PRS.

**10.** The first terminal of claim 9, wherein the controller controls to obtain configuration information for transmitting a first sidelink positioning signal,

wherein the configuration information includes time information allocable to at least one the first S-PRS, frequency information allocable to the first S-PRS, information about a number of repetitive transmissions of the first S-PRS, and delay transmission information of the first S-PRS.

**11.** The first terminal of claim 10, wherein the controller controls to allocate a resource for transmitting the first S-PRS based on the frequency information allocable to the first S-PRS,

a frequency area in which the first S-PRS is transmitted is smaller than or equal to a preconfigured frequency area.

**12.** The first terminal of claim 9, wherein the first sidelink positioning signal includes at least one second S-PRS request signal or positioning related information.

**13.** The first terminal of claim 12, wherein the controller controls to transmit the at least one second S-PRS request signal or positioning related information through sidelink control information (SCI),

the sidelink control information is transmitted through physical sidelink control channel (PSCCH).

**14.** A second terminal that performs positioning through a sidelink in a wireless communication system, comprising:

a transceiver that transmit and receive at least one signal; and
a controller,
wherein the controller controls to receive a first sidelink positioning signal, measure a transmission/reception signal time difference of a second terminal based on the first sidelink positioning signal, allocate a resource for transmitting a second sidelink positioning signal, and transmit the second sidelink positioning signal including the transmission/reception signal time difference of the second terminal based on the allocated resource,
wherein the first sidelink positioning signal includes a first sidelink positioning reference signal (S-PRS), and the second sidelink positioning signal includes a second S-PRS.

**15.** The second terminal of claim 14, wherein the controller controls to obtain configuration information for transmitting a second sidelink positioning signal, and allocate a resource for transmitting the second S-PRS based on frequency information allocable to the second S-PRS

wherein the configuration information includes time information allocable to at least one the second S-PRS, the frequency information allocable to the second S-PRS, information about a number of repetitive transmissions of the second S-PRS, and delay transmission information of the second S-PRS, a frequency area in which the second S-PRS is transmitted is smaller than or equal to a preconfigured frequency area.

# FIG. 1

(a) In-coverage scenario

gNB / eNB / RSU

Downlink (DL)    Downlink (DL)

Uplink (UL)

UE-1    Sidelink (SL)    UE-2
        Sidelink (SL)

(b) Partial coverage scenario

gNB / eNB / RSU

Downlink (DL)

Uplink (UL)

UE-1    Sidelink (SL)    UE-2
        Sidelink (SL)

(c) Out-of-coverage scenario

Sidelink (SL)

UE-1    Sidelink (SL)    UE-2

(d) Inter-cell V2X communication scenario

gNB / eNB / RSU                    gNB / eNB / RSU

Downlink (DL)          Downlink (DL)

Uplink (UL)                    Uplink (UL)

UE-1    Sidelink (SL)    UE-2
        Sidelink (SL)

EP 4 429 373 A1

# FIG. 2

(a) Unicast communication

UE-1         UE-2

(b) Groupcast communication

Group A         Group B

UE-2

UE-5

UE-1

UE-3

UE-4

UE-6

UE-7

EP 4 429 373 A1

# FIG. 3

# FIG. 4

(a)    (b)    (c)

PosRef UE (RSU)

Location Sever

Target UE

BS

PosRef UE

------→ Configuration    ◄——►S-PRS    ——→ Measurement    ——→ Known location

EP 4 429 373 A1

FIG. 5

(a)                          (b)                          (c)

Location Sever        PosRef UE (RSU)

BS        Target UE

PosRef UE

------▶ Configuration      ◀——▶ S-PRS      ——————▶ Measurement      ———▶ Known location

# FIG. 6

Location Sever → PosRef UE (RSU) → Target UE → PosRef UE

(a)

Location Sever → PosRef UE (RSU) → Target UE → BS → PosRef UE

(b)

Location Sever → PosRef UE (RSU) → Target UE → PosRef UE

(c)

------► Configuration        ◄------► S-PRS        ------► Measurement        ------► Known location

EP 4 429 373 A1

FIG. 7

FIG. 8

(a)

| | 2 symbols | 4 symbols | 6 symbols | 12 symbols |
|---|---|---|---|---|
| Comb-2 | {0,1} | {0,1,0,1} | {0,1,0,1,0,1} | {0,1,0,1,0,1,0,1,0,1,0,1} |
| Comb-4 | NA | {0,2,1,3} | NA | {0,2,1,3,0,2,1,3,0,2,1,3} |
| Comb-6 | NA | NA | {0,3,1,4,2,5} | {0,3,1,4,2,5,0,3,1,4,2,5} |
| Comb-12 | NA | NA | NA | {0,6,3,9,1,7,4,10,2,8,5,11} |

(b) Comb-2, 2-symbols

(c) Comb-2, 4-symbols

(d) Comb-2, 6-symbols

(e) Comb-2, 12-symbols

(f) Comb-4, 4-symbols

(g) Comb-4, 12-symbols

(h) Comb-6, 6-symbols

(i) Comb-6, 12-symbols

(j) Comb-12, 12-symbols

FIG. 9

## FIG. 10

(a)

☐ Tx pool for SL PRS transmission          ▨ Tx pool for PSSCH transmission

Physical SL Slots

(b)

SL BWP N          SL PRS transmission

⋮

SL BWP 1          PSSCH transmission

EP 4 429 373 A1

# FIG. 11

EP 4 429 373 A1

FIG. 12

# FIG. 13

UE-A (S-PRS requesting UE)           UE-B (UE receiving S-PRS request)

| allocate resource for SL positioning | —1301 |

S-PRS request
S-PRS, Other PoS info

1302

| allocate resource for SL positioning | 1303 |

| determine whether allocated resource satisfies positioning accuracy/latency requirement | 1304 |

S-PRS
Rx-Tx time difference, AoA, Other PoS info

1305

| Tx-Rx time difference | —1306 |

| calculate ToF | —1307 |

# FIG. 14

UE-A (S-PRS requesting UE)          UE-B (UE receiving S-PRS request)

| allocate resource for SL positioning |—1401

1402— **S-PRS request**
**S-PRS, Other PoS info**

1403— | allocate resource for SL positioning |

1404— | determine whether allocated resource satisfies positioning accuracy/latency requirement |

**S-PRS**
**Rx-Tx time difference1, AoA, Other PoS info**
1405—

| Tx-Rx time difference1 |—1406

| allocate resource for SL positioning |—1407

1408— **S-PRS request**
**S-PRS, Other PoS info**

1409— | Tx-Rx time difference2 |

1410— | allocate resource for SL positioning |

| Rx-Tx time difference2 |—1413

1411— | determine whether allocated resource satisfies positioning accuracy/latency requirement |

**S-PRS**
**Tx-Rx time difference, AoA, , Other PoS info**
1412—

| calculate ToF |—1414

FIG. 15

terminal
processor
1502

terminal
receiver
1500

terminal
transmitter
1504

FIG. 16

base station
processor

1603

base station
receiver

1601

base station
transmitter

1605

## INTERNATIONAL SEARCH REPORT

| International application No. |
| --- |
| **PCT/KR2022/019593** |

| A. | CLASSIFICATION OF SUBJECT MATTER |
| --- | --- |
| | **H04W 72/04**(2009.01)i; **H04W 64/00**(2009.01)i |

According to International Patent Classification (IPC) or to both national classification and IPC

| B. | FIELDS SEARCHED |
| --- | --- |

Minimum documentation searched (classification system followed by classification symbols)

H04W 72/04(2009.01); H04L 5/00(2006.01); H04W 4/029(2018.01); H04W 56/00(2009.01); H04W 64/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: sidelink positioning reference signal, resource, time of difference

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2021-0297206 A1 (QUALCOMM INCORPORATED) 23 September 2021 (2021-09-23) See paragraphs [0104]-[0145]; and figures 10-14. | 1,6,9,14 |
| Y | | 2-5,7-8,10-13,15 |
| Y | WO 2021-240479 A1 (LENOVO (SINGAPORE) PTE. LTD.) 02 December 2021 (2021-12-02) See paragraphs [0058]-[0082]; and figures 4-6. | 2-5,7-8,10-13,15 |
| Y | WO 2021-112610 A1 (LG ELECTRONICS INC.) 10 June 2021 (2021-06-10) See paragraphs [0320]-[0321]; and claim 1. | 3,8,11,15 |
| A | US 2021-0136527 A1 (TADAYON, Navid et al.) 06 May 2021 (2021-05-06) See paragraphs [0123]-[0144]; and figure 9. | 1-15 |
| A | US 2019-0230618 A1 (NOKIA TECHNOLOGIES OY) 25 July 2019 (2019-07-25) See paragraphs [0022]-[0047]; and figure 2. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 March 2023** | **09 March 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="3">INTERNATIONAL SEARCH REPORT</td><td colspan="2">International application No.</td></tr>
<tr><td colspan="3">Information on patent family members</td><td colspan="2">**PCT/KR2022/019593**</td></tr>
</table>

| Patent document cited in search report | | Publication date (day/month/year) | Patent family member(s) | Publication date (day/month/year) |
|---|---|---|---|---|
| US | 2021-0297206 A1 | 23 September 2021 | CN        115280860      A | 01 November 2022 |
|    |                 |                   | EP          4122255    A1 | 25 January 2023 |
|    |                 |                   | KR   10-2022-0155429    A | 22 November 2022 |
|    |                 |                   | WO        2021-188208  A1 | 23 September 2021 |
| WO | 2021-240479 A1  | 02 December 2021  | KR   10-2023-0019102    A | 07 February 2023 |
|    |                 |                   | WO        2021-240478  A1 | 02 December 2021 |
| WO | 2021-112610 A1  | 10 June 2021      | EP          4072195    A1 | 12 October 2022 |
|    |                 |                   | KR   10-2021-0071428    A | 16 June 2021 |
|    |                 |                   | KR   10-2022-0091509    A | 30 June 2022 |
|    |                 |                   | US        2022-0416976 A1 | 29 December 2022 |
| US | 2021-0136527 A1 | 06 May 2021       | CN        114667773      A | 24 June 2022 |
|    |                 |                   | EP          4042769    A1 | 17 August 2022 |
|    |                 |                   | US         11425531    B2 | 23 August 2022 |
|    |                 |                   | WO        2021-089003  A1 | 14 May 2021 |
| US | 2019-0230618 A1 | 25 July 2019      | WO        2019-145095  A1 | 01 August 2019 |

Form PCT/ISA/210 (patent family annex) (July 2022)